(19) Europäisches Patentamt
European Patent Office
Office européen des brevets

(11) EP 2 831 187 B1

# (12) EUROPEAN PATENT SPECIFICATION

(45) Date of publication and mention of the grant of the patent:
**15.11.2017 Bulletin 2017/46**

(21) Application number: **12799158.6**

(22) Date of filing: **07.12.2012**

(51) Int Cl.:
***C09D 123/00*** $^{(2006.01)}$ ***C08L 23/00*** $^{(2006.01)}$

(86) International application number:
**PCT/EP2012/074763**

(87) International publication number:
**WO 2013/143628 (03.10.2013 Gazette 2013/40)**

## (54) EXTRUSION COATED POLYMER LAYER WITH REDUCED COEFFICIENT OF FRICTION

EXTRUSIONSBESCHICHTETE POLYMERSCHICHT MIT REDUZIERTEM ABRIEBSKOEFFIZIENTEN

COUCHE POLYMÈRE REVÊTUE PAR EXTRUSION À COEFFICIENT DE FROTTEMENT RÉDUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2012 EP 12161850**

(43) Date of publication of application:
**04.02.2015 Bulletin 2015/06**

(73) Proprietor: **Borealis AG**
**1220 Vienna (AT)**

(72) Inventor: **NUMMILA-PAKARINEN, Auli**
**FIN-06100 Porvoo (FI)**

(74) Representative: **Maiwald Patentanwalts GmbH**
**Elisenhof**
**Elisenstrasse 3**
**80335 München (DE)**

(56) References cited:
**EP-A2- 0 184 094**
**WO-A1-2009/141273**
**US-A1- 2003 008 082**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

An extrusion coated substrate as well as to the use of a non-migratory slip agent together with an anti-blocking agent to reduce the coefficient of friction (COF) of an extrusion coated polymer layer preferably without compromising the adhesion performance of said layer is described. Further, an extrusion coating process using a composition comprising a polyolefin, a non-migratory slip agent and an anti-blocking agent is described.

In an extrusion coating process a substrate is coated with polymer. The substrate is typically a fibrous substrate, such as paper, paperboard or Kraft paper; a metal foil, such as aluminum foil; or a plastic film, such as a biaxially oriented polypropylene film, polyethylene terephthalate (PET) film, polyamide (PA) film or cellophane film. The polymer is extruded onto the moving substrate through a flat die. When the melt exits the die the melt film is pulled down into a nip formed between two rollers, the pressure roll and the chill roll, situated below the die. The substrate, moving at a velocity which is higher than that of the melt film, draws the film to the required thickness. The pressure between the two rolls forces the film onto the substrate. Further, the film is cooled and solidified by the low temperature of the chill roll. The draw-down ratio, which is one of the characteristic parameters of the extrusion coating process, is the ratio of the die gap to the thickness of the polymer film on the substrate.

In a typical extrusion coating process the substrate is passed at a high velocity, typically more than 100 m/min. Modern machines are designed to operate at lines speeds of up to 1000 m/min. In the instant application "line speed" and "draw-down speed" are considered as synonyms denoting the speed of the substrate in the coating line.

Description of extrusion coating process is given, for instance, in Crystalline Olefin Polymers, Part II, by R.A.V. Raff and K.W. Doak (Interscience Publishers, 1964), pages 478 to 484, or Plastics Processing Data Handbook, by Dominick V. Rosato (Chapman & Hall, 1997), pages 273 to 277.

Normally the polymer melt exits the die at relatively high temperatures to promote oxidation. Oxidation is needed to improve the adhesion between the coating and the substrate. Typical temperatures at which the polymer melt exits the die are between 275 to 330 °C. These temperatures are however so high that additives which have been shown potentially useful in other film making processes, like blown film or cast film processes, cannot be employed in the extrusion coating process. Typically, in other film making processes slip and/or anti-blocking agents are used to reduce friction between two adjacent surfaces. However, in the extrusion coating process such additives have not generally been used as they decompose or evaporate at the applied processing temperatures of extrusion coating.

Accordingly, the object is to provide a concept which enables a skilled person to use a polyolefin composite in the extrusion coating process which reduces the coefficient of friction (COF) of the produced coating layer preferably without compromising the adhesion properties of said layer.

The finding is to use a polyolefin (PO) containing a non-migratory slip agent (NM-SA) and an anti-blocking agent (AB).

An article is described comprising a substrate (S) and a polymer layer (PL), said polymer layer (PL) is extrusion coated on the substrate (S), wherein

(a) said substrate (S) is a metal (M), preferably said substrate (S) is a metal (M) selected from the group consisting of iron, iron alloy, like steel, copper, copper alloy, aluminum, and aluminum alloy,
and

(b) the polymer layer (PL) comprises a composition (Co) comprising

(b1) polyolefin (PO),
(b2) a non-migratory slip agent (NM-SA), preferably a non-migratory slip agent (NM-SA) having a molecular weight of at least 400 g/mol, more preferably said non-migratory slip agent (NM-SA) is

- a fatty acid amid derivative of formula (I)

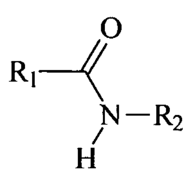

wherein

$R_1$ is a $C_5$ to $C_{25}$ alkyl residue or $C_5$ to $C_{25}$ alkenyl residue,

$R_2$ is a long-chain organic residue containing at least 6 carbon atoms,

or

- a polysiloxane, like a polydimethylsiloxane,

and

(b3) an anti-blocking agent (AB).

Furthermore, a process is described of extrusion coating a substrate (S) by extruding a composition (Co) in a molten state through a flat die onto said substrate (S) at a temperature of from 220 to 280 °C, preferably from 240 to 270 °C, thereby forming a polymer layer (PL) on said substrate (S), wherein

(a) said substrate (S) is a metal (M), preferably said substrate (S) is a metal (M) selected from the group consisting of iron, iron alloy, like steel, copper, copper alloy, aluminum, and aluminum alloy,

(b) said composition (Co) comprises

(b1) a polyolefin (PO), preferably a polyethylene (PE) and/or a polypropylene (PP),

(b2) a non-migratory slip agent (NM-SA), preferably a non-migratory slip agent (NM-SA) having a molecular weight of at least 400 g/mol, more preferably said non-migratory slip agent (NM-SA) is

- a fatty acid amid derivative of formula (I)

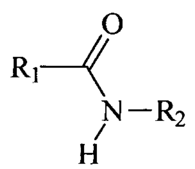

wherein

$R_1$ is a $C_5$ to $C_{25}$ alkyl residue or $C_5$ to $C_5$ alkenyl residue,
$R_2$ is a long-chain organic residue containing at least 6 carbon atoms,

or

- a polysiloxane, like a polydimethylsiloxane,

and

(b3) an anti-blocking agent (AB).

Moreover, the use of a non-migratory slip agent (NM-SA) together with an anti-blocking agent (AB) in a polymer layer (PL) being extrusion coated on a substrate (S) to reduce the coefficient of friction (COF) of said polymer layer (PL) is described. Preferably the polymer layer (PL) comprises in addition to the non-migratory slip agent (NM-SA) and the anti-blocking agent (AB) a polyolefin (PO), more preferably a polyethylene (PE) and/or a polypropylene (PP). Preferably the coefficient of friction (COF) is regarded to be reduced in case the coefficient of friction (COF) of the polymer layer is below 0.5, more preferably below 0.3, like below 0.2, the coefficient of friction (COF).

The invention is disclosed in the independent claims. Preferred embodiments of the invention are disclosed in the dependent claims.

When in the following reference is made to preferred embodiments or technical details of the articles described, it is to be understood that these preferred embodiments or technical details also refer to the extrusion coating processes as well as to the use described herein. If, for example, it is set out that polyolefin (PO) in the composition (Co) of the article is preferably branched, also the polyolefin (PO) provided in the processes and uses described is preferably branched as well.

The article described must comprise a substrate (S) and an extrusion coated polymer layer (PL) based on the composition (Co).

The terms "polymer layer" and "extrusion coated layer" define the same subject, namely the polymer layer which is extrusion coated on the substrate and thus are interchangeable.

The substrate (S) to be coated is metal (M). Preferably the metal (M) is selected from the group consisting of

iron, iron alloy, like steel, copper, copper alloy, aluminum, and aluminum alloy. Preferably said metal (M) is a metal sheet, a metal strip or a metal foil and still more preferably the metal (M) is a metal sheet or a metal strip and selected from the group consisting of iron, iron alloy, like steel, copper, copper alloy, aluminum, and aluminum alloy. In one specifically preferred embodiment the metal (M) is aluminum or aluminum alloy. Still further preferred the metal (M) is a metal sheet or metal strip of aluminum or aluminum alloy. Typically, the metal strip or sheet or foil has a thickness in the range of 30 to 500 μm, preferably from 150 to 350 μm and more preferably of 180 to 280 μm.

As mentioned above the substrate (S) is extrusion coated and thus at least one surface of the substrate (S) is coated. It is however within the scope that both sides of the substrate, i.e. the outer and inner surface (side) of the substrate are extrusion coated.

The term extrusion "coted on" the substrate (S) shall not mean that the composition (Co) is necessarily directly coated on the surface of the substrate (S). Rather the term "coated on" is understood in a broader sense, namely that the composition (Co) is extrusion coated on the substrate which may already contain other layers on its surface. Typically the substrate (S) described contains already an adhesive layer (AL) before the composition (Co) is extrusion coated to form the polymer layer (PL) on the substrate (S). Accordingly, between the polymer layer (PL) and the substrate (S) an adhesive layer (AL) is inserted. Therefore the polymer layer (PL) described is neither an adhesive layer between the substrate (S) and a coating layer nor a glue layer between two substrates as used in laminates. Thus, for instance, the article described is not a laminate.

Accordingly the polymer layer (PL) described is not understood as an adhesive layer, i.e. as a layer between two substrates.

In one preferred embodiment the polymer layer (PL), i.e. the extrusion coated layer, is the surface layer of the instant article. "Surface layer" described means that no further layer between the surface layer of the article and the environment is placed. In other words, the polymer layer (PL) of the instant invention is the outmost layer of the article.

Thus, if it is said that the polymer layer (PL) is (extrusion coated) on the substrate (S) this does not necessarily mean that the polymer layer (PL) is directly (extrusion coated) on the substrate (S). In other words, between the substrate (S) and the polymer layer (PL) may located other layers, like an adhesion layer (AL) and/or a polyolefin layer, like a polyethylene layer or polypropylene layer. For example in one embodiment the article described comprises, more preferably consists of, in the order of the substrate (S), an adhesion layer (AL), an intermediate polyolefin layer being preferably a polypropylene layer, and, as surface layer, the polymer layer (PL) as defined. In another embodiment the inventive article comprises, more preferably consists of, in the order of the substrate (S), an adhesion layer (AL), and, as surface layer, the polymer layer (PL) as defined.

Accordingly a component is regarded as main component in case it makes up at least 50 wt.-%, more preferably at least 80 wt.-%, like at least 90 wt.-% of the polymer layer and/or the composition (Co).

Typically, adhesives layers (AL) comprise, more preferably consists of, polar copolymers of ethylene containing acid groups such as a copolymer of ethylene and acrylic acid; and polymers of ethylene or propylene which have been grafted with comonomers containing acid or acid anhydride groups, such as maleic acid anhydride grafted polymers of ethylene and propylene.

The adhesives layers (AL) can be produced in a simple manner by reactive extrusion of the polymer, for example with maleic anhydride in the presence of free radical generators (like organic peroxides), as disclosed for instance in EP 0 572 028.

Preferred amounts of groups deriving from polar compounds in the adhesives layer (AL) are from 0.5 to 3.0 wt.-%, more preferably from 0.5 to 4.0 wt.-%, still more preferably from 0.5 to 3.0 wt.-%.

Preferred values of the melt flow rate $MFR_2$ (230 °C) for the adhesives layer (AL) are from 1.0 to 500 g/10 min.

The article described must at least comprise the extrusion coated substrate (S) and may consist of the extrusion coated substrate depending on the end use. Typically, the articles are used in food and liquid packaging. However the articles described may also be used in rigid and flexible packaging and industrial packaging articles, as well as disposable cups, plates and the like. In addition, the articles may be used in manufacturing different industrial and domestic articles. Accordingly, in its broadest meaning the instant article is the extrusion coated substrate as such. The extrusion coated sheet can then be formed into different end-use articles such as cans, like beverage cans or tin cans.

In some embodiments the extrusion coated article is subjected to different machining and forming operations in a downstream process. Such operations include, for instance, drilling, punching and bending.

The polymer layer (PL) of the extrusion coated substrate (S) has preferably a thickness in the range of 5 to 1,000 μm, more preferably in the range of 5 to 100 μm, such as from about 7 to 20 μm. The specific thickness will be selected according to the nature of the substrate, its expected subsequent handling conditions and, most importantly, the subsequent use of the end product. The thickness of the substrate (S) may generally be chosen freely and has no effect on the coating process. It can typically be from of 30 to 500 μm, preferably from 150 to 350 μm and more preferably of 180 to 280 μm.

The extrusion coating process is preferably carried out using conventional extrusion coating techniques. Hence, the polymer composition (Co) is fed to an extruding device. From the extruder the polymer melt is passed through a flat

die to the substrate (S) to be coated. Due to the distance between the die lip and the nip, the molten plastic is oxidized in the air for a short period, usually leading to an improved adhesion between the extrusion coated layer and the substrate (S). The coated substrate (S) is cooled on a chill roll, after which it is passed to edge trimmers and wound up.

Preferably the line speed (draw-down speed) is more than 100 m/min, for instance, from 100 to 1,000 m/min, such as from 100 to 500 m/min. As mentioned above the article described is not a laminate which requires the presence of a glue. Accordingly, the instant process does not cover the steps of gluing the surface(s) of the substrate (S), joining them and curing or drying.

The temperature of the polymer melt, i.e. of the composition (Co) melt, is typically between 220 to 300 °C, preferably from 240 to 280 °C.

It is also possible to employ a coating line with at least two extruders to make it possible to produce multilayered coatings with different polymers. It is also possible to have arrangements to treat the polymer melt exiting the die to improve adhesion, e.g. by ozone treatment, and/or the substrate with corona treatment or flame treatment. For the corona treatment, for instance the substrate is passed between two conductor elements serving as electrodes, with such a high voltage, usually an alternating voltage (about 10000 V and 10000 Hz), being applied between the electrodes that spray or corona discharges can occur. Due to the spray or corona discharge, the air above the substrate surface is ionized and reacts with the molecules of the substrate surface. An overview of the different techniques is given, for instance, by David A. Markgraf of Enercon Industries Corporation in http://www.enerconind.com/files/7f/7fb3c045-dee6-461c-b508-259b816d0bf4.pdf (see pages 2 to 8 for flame treatment, 9 to 20 for corona treatment and 20 to 21 for ozone treatment).

Accordingly, the polymer layer (PL) must comprise the composition (Co). Preferably the composition (Co) constitutes the main part of the polymer layer. Accordingly, the polymer layer comprises at least 50 wt.-%, more preferably at least 70 wt.-%, still more preferably at least 85 wt.-%, yet more preferably 95 wt.-%, still yet more preferably consists of, the composition (Co). Accordingly, it is appreciated that the polymer layer comprises 70 to 100 wt.-%, like 70 to 90 wt.-%, more preferably 85 to 100 wt.-%, like 85 to 90 wt.-%, yet more preferably 95 to 100 wt.-%, like 95 to 99 wt.-%, of the composition (Co).

In turn, the polymer composition (Co) described must comprise a polyolefin (PO), a non-migratory slip agent (NM-SA) and an anti-blocking agent (AB). Accordingly the polymer composition (Co) may comprise further polymers and in particular further additives not explicitly mentioned. Therefore, the polymer composition (Co) comprises at least 50 wt.-%, more preferably at least 70 wt.-%, yet more preferably at least 80 wt.-%, like 80 to 100 wt.-% or 80 to 90 wt.-%, still more preferably at least 90 wt.-%, like 90 to 99 wt.-% or 90 to 100 wt.-%, of the polyolefin (PO), wherein the weight percentage is based on all polymers present in the polymer composition. In a preferred embodiment the composition (Co) contains not more than 5 wt.-%, more preferably not more than 2 wt.-%, like not more than 1 wt.-%, of polymers other than the polyolefin (PO) described.

## The polyolefin (PO)

Preferably the polyolefin (PO) should have a rather high melt flow rate $MFR_2$. Accordingly, it is appreciated that the polyethylene (PE) has a melt flow rate $MFR_2$ (190 °C) of at least 2.0 g/10min, more preferably in the range of 2.0 to 30.0 g/10min, like in the range of 2.5 to 30.0 g/10min, yet more preferably in the range of 4.0 to 20.0 g/10min and the polypropylene (PP) has a melt flow rate $MFR_2$ (230 °C) of at least 2.0 g/10min, more preferably in the range of 2.0 to 60.0, yet more preferably in the range of 8.0 to 40.0 g/10min.

The polyolefin (PO) can be of linear (1-PO) or branched structure (b-PO), the latter being preferred. The term "branched" or "branched structure" is understood as commonly known in the art. Branched polymers have a linear backbone from which extend branches with considerable length. These branches may contain further branches. Thus for instance a low density polyethylene (LDPE) is regarded to be a branched polyethylene whereas the high density polyethylene (HDPE) and linear low density polyethylene (LLDPE) which are substantially unbranched are regarded as being of linear structure, i.e. being unbranched.

One phenomen observed with branched polymers is that they show increased strain hardening compared to the linear counterparts. Accordingly branched polyolefins (b-PO) are the preferred candidates. On the other hand, strain hardening can also be accomplished by increasing the molecular mass or by broadening the molecular weight distribution of the polymer. Therefore, also non-branched polyolefins, i.e. linear polyolefins (1-PO), can be used as well in case they have been tailored for the extrusion coating process. A further option is to use a mixture of branched polyolefin (b-PO) and linear polyolefin (1-PO).

Accordingly, the term "polyolefin (PO)" is to be understood broadly and thus covers also the mixture of different polyolefins. "Different polyolefins" differ in chemical structure, like a polyethylene (PE) to a polypropylene (PP) or a branched polyolefin (b-PO) to a liner polyolefin (1-PO). Thus in one embodiment the polyolefin (PO) is just one polyolefin. In another embodiment the polyolefin (PO) is a mixture of two or more different polyolefns, more preferably of two different polyolefins.

Accordingly, in a preferred embodiment the polyolefin (PO) is selected from the group consisting of a linear polyethylene (1-PE), a branched polyethylene (b-PE), a linear polypropylene (1-PP), a branched polypropylene (b-PP) and mixtures thereof. Accordingly, in one embodiment the polyolefin (PO) is either a polyethylene (PE) or a polypropylene (PP), the latter especially preferred. More precisely in one embodiment the polyolefin (PO) is either a branched polyethylene (b-PE) or a branched polypropylene (b-PP), the latter especially preferred. In another embodiment the polyolefin (PO) is a mixture of two different polyethylenes (PEs), like a branched polyethylene (b-PE) and a linear polyethylene (1-PE). In still another embodiment the polyolefin (PO) is a mixture of a branched polypropylene (b-PP) and linear polypropylene (1-PP). In yet another preferred embodiment the polyolefin (PO) is a mixture of a branched polypropylene (b-PP) and linear polyethylene (1-PE). In still yet another embodiment the polyolefin (PO) is a mixture of a branched polyethylene (b-PE) and linear polypropylene (1-PP). The weight ratio of linear polymer to branched polymer, as mentioned before, may be in a broad range, like 95/5 to 5/95 or 80/20 to 50/50.

In the following the individual polyolefins (PO) will be described in more detail.

Preferably the branched polyethylene (b-PE) is a low density polyethylene (LDPE). Preferably the low density polyethylene (LDPE) is a low density homopolymer of ethylene (referred herein as LDPE homopolymer). The low density polyethylene (LDPE) is a polyethylene produced in a high pressure process (HP). Typically, the polymerization of ethylene and optional further comonomer(s) in the high pressure process (HP) is carried out in the presence of an initiator(s). Such processes are disclosed in, among others, WO-A-96/016119, EP-A-1,777,238, EP-A-1,167,396, DE-A-10 351 262 and WO-A-2007/134671.

The meaning of low density polyethylene (LDPE) is well known and documented in the literature. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the polyethylene produced in the presence of an olefin polymerization catalyst. Moreover, said low density polyethylene (LDPE), preferably the low density polyethylene (LDPE) homopolymer, may be unsaturated.

In case the low density polyethylene (LDPE) is a copolymer it comprises typical comonomers, like acrylates, methacrylates and acetates.

Typically, and preferably the density of the low density polyethylene (LDPE) is higher than 860 $kg/m^3$. Preferably the density of the low density polyethylene (LDPE), i.e. of the LDPE homopolymer or copolymer, is not higher than 940 $kg/m^3$, and preferably is from 900 to 930 $kg/m^3$, like from 910 to 925 $kg/m^3$.

The melt flow rate $MFR_2$ (2.16 kg, 190 °C) of the low density polyethylene (LDPE) is preferably at least 2.5 g/10min, more preferably has a melt flow rate $MFR_2$ (190°C) in the range of 2.5 to 20.0 g/10min, yet more preferably in the range of 4.0 to 15.0 g/10min.

In one preferred embodiment the polyethylene (PE), i.e. the low density polyethylene (LDPE), has a strain hardening factor (SHF) of at least 2.0, more preferably in the range of 2.0 to 7.0, yet more preferably in the range of 2.5 to 6.0 measured at a strain rate of 3.0 $s^{-1}$ and a Hencky strain of 2.5 (140 °C).

As mentioned the low density polyethylene (LDPE) is preferably produced at high pressure by free radical initiated polymerization (referred to as high pressure (HP) radical polymerization). The high pressure (HP) reactor can be e.g. a well known tubular or autoclave reactor or a mixture thereof, preferably an autoclave reactor. The high pressure (HP) polymerization and the adjustment of process conditions for further tailoring the other properties of the polyolefin depending on the desired end application are well known and described in the literature, and can readily be used by a skilled person. Suitable polymerization temperatures range up to 400 °C, preferably from 150 to 350°C and pressure from 70 MPa, preferably 100 to 400 MPa, more preferably from 100 to 350 MPa. Pressure can be measured at least after compression stage and/or after the autoclave reactor. Temperature can be measured at several points during all steps. Description of the polymerization process may be found in the above-mentioned documents WO-A-96/016119, EP-A-1,777,238, EP-A-1,167,396, DE-A-10 351 262 and WO-A-2007/134671 as well as in EP-A-2,123,707 and Vieweg, Scley and Schwartz, Kunststoff Handbuch, Band IV, Polyolefine, Carl Hanser Verlag (1969), pages 39 to 51.

Further details of the production of ethylene polymers by high pressure radical polymerization can be found i.e. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

The linear polyethylene (1-PE) is preferably a high density polyethylene (HDPE), a medium density polyethylene (MDPE) or a linear low density polyethylene (LLDPE). More preferably the linear polyethylene (1-PE) is a linear low density polyethylene (LLDPE).

The linear polyethylene (1-PE) is produced by polymerizing ethylene, optionally together with one or more alpha-olefin comonomers, in the presence of an olefin polymerization catalyst. The density of the linear polyethylene (1-PE) is preferably more than 880 $kg/m^3$. More preferably the linear polyethylene (1-PE) has a density in the range of more than 900 to 970 $kg/m^3$, like 905 to 935 $kg/m^3$. The melt flow rate $MFR_2$ (2.16 kg, 190 °C) of the linear polyethylene (1-PE) is preferably in the range of 2.0 to 50.0 g/10min, yet more preferably in the range of 5.0 to 30.0 g/10min. Typically

the linear polyethylene (1-PE) is produced by polymerization of ethylene and optional comonomers using a single-site catalyst, such as a metallocene catalyst, a Ziegler-Natta catalyst or a chromium ("Phillips") catalyst.

Such linear polyethylene (1-PE) may thus contain short-chain branches originating from the comonomer. As it is well known to the person skilled in the art the content and distribution of such short-chain branches influences the density of the polyethylene. The length of short-chain branches depends on the comonomer and is typically from 2 (when 1-butene is used as a comonomer) to 6 (when 1-octene is used as a comonomer). Such short-chain branched polymer is considered as a linear polyethylene (1-PE).

The polypropylene (PP) is a linear polypropylene (1-PP) or a branched polypropylene (b-PP). The linear polypropylene (1-PP) can be produced in a known manner by employing a single-site or a Ziegler Natta catalyst. Preferably the linear polypropylene (1-PP) has a melt flow rate $MFR_2$ (2.16 kg, 230 °C) of at least 2.0 g/10min, more preferably in the range of 2.0 to 60.0 g/10min, like in the range of 8.0 to 40.0 g/10min. Further the linear polypropylene (1-PP) can be a linear propylene homopolymer (1-H-PP) or a linear propylene copolymer (1-C-PP).

The expression "propylene homopolymer" refers to a polypropylene that consists substantially, i.e. of at least 97 mol.-%, preferably of at least 98 mol.-%, more preferably of at least 99 mol.-%, most preferably of at least 99.8 mol.-% of propylene units. In a preferred embodiment only propylene units in the propylene homopolymer are detectable.

In case the linear polypropylene (1-PP) is a linear propylene copolymer (1-C-PP) it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the linear propylene copolymer (1-C-PP) comprises, especially consists of, monomers copolymerizable with propylene from the group consisting of ethylene, 1-butene and 1-hexene. More specifically the linear propylene copolymer (1-C-PP) comprises - apart from propylene - units derivable from ethylene and/or 1-butene. In a preferred embodiment the linear propylene copolymer (1-C-PP) comprises units derivable from ethylene and propylene only. The comonomer content in the linear propylene copolymer (1-C-PP) is preferably in the range of more than 0.5 to 10.0 mol.-%, still more preferably in the range of more than 0.5 to 7.0 mol.-%.

In one preferred embodiment the polypropylene (PP) is a branched polypropylene (b-PP). Branching can be achieved by using specific catalysts, i.e. specific single-site catalysts. Reference is made for instance to EP 1 892 264 in which the preparation of branched polypropylene (b-PP) by use of a metallocene catalyst is described in more detail. Typically, such a branched polypropylene (b-PP), i.e. a branched polypropylene (b-PP) produced in the presence of a single-site catalyst, has branching index g' of less than 1.0, more preferably of less than 0.9, yet more preferably in the range of 0.3 to 0.9, like in the range of 0.4 to 0.8. Further, like the linear propylene polypropylene (1-PP), the branched polypropylene (b-PP), i.e. the branched polypropylene (b-PP) produced in the presence of a single-site catalyst, can be a branched polypropylene homopolymer (b-H-PP) or a branched propylene copolymer (b-C-PP). Concerning the comonomer content and type of comonomer it is referred to the information provided for the linear polypropylene (1-PP). Further it is preferred that said branched polypropylene (b-PP) has a melt flow rate $MFR_2$ (2.16 kg, 230 °C) of at least 2.0 g/10min, more preferably in the range of 2.0 to 40 g/10min, like in the range of 8.0 to 40.0 g/10min.

In another preferred embodiment the branched polypropylene (b-PP) is a so called high melt strength polypropylene (HMS-PP). Different to the branched polypropylene (b-PP) discussed in the previous paragraph the high melt strength polypropylene (HMS-PP) has been obtained by chemical modification as discussed in detail below. It is known that such polymers can be determined by their rheological behavior. Accordingly, the branched polypropylene (b-PP), in particular the high melt strength polypropylene (HMS-PP), has preferably a strain hardening factor (SHF) of at least 1.7, more preferably of at least 1.9, yet more preferably in the range of 1.7 to 7.0, still more preferably in the range of 1.9 to 6.5 measured at a strain rate of 3.0 $s^{-1}$ and a Hencky strain of 2.5. Additionally, or alternatively the high melt strength polypropylene (HMS-PP) can be defined by the branching index g'. Accordingly, it is preferred that the high melt strength polypropylene (HMS-PP) has branching index g' of less than 1.0, more preferably of less than 0.9, yet more preferably in the range of 0.3 to 0.9, like in the range of 0.4 to 0.8.

In a further preferred embodiment the high melt strength polypropylene (HMS-PP) is characterized by its gel content. Thus it is preferred that the high melt strength polypropylene (HMS-PP) has a gel content of below 1.0 wt.-%, even more preferred of not more than 0.80 wt.-%, still more preferred of not more than 0.50 wt.-% determined as the relative amount of polymer insoluble in boiling xylene (xylene hot insoluble fraction, XHI). On the other hand, the high melt strength polypropylene (HMS-PP) must have a certain degree of branching and thus a certain amount of gel content, i.e. of at least 0.15 wt.-%, more preferably of at least 0.27 wt.-%. Thus a preferred range for the gel content of the high melt strength polypropylene (HMS-PP) is 0.05 to 0.90 wt.-%, more preferred 0.20 to 0.8 wt.-%.

Preferably the high melt strength polypropylene (HMS-PP) has preferably a melt flow rate $MFR_2$ (230 °C) in a range of 2.0 to 60.0 g/10 min, more preferably in a range of 8.0 to 40.0 g/10 min, still more preferably in a range of 10.0 to 30.0 g/10 min.

Preferably, the high melt strength polypropylene (HMS-PP) has a melting point of at least 130°C, more preferably of at least 135°C and most preferably of at least 140°C. The crystallization temperature is preferably at least 120 °C.

In one particular preferred embodiment the polyolefin (PO) is the branched polypropylene (b-PP), like the high

melt strength polypropylene (HMS-PP), as defined herein. The specific advantage of the branched polypropylene (b-PP), like the high melt strength polypropylene (HMS-PP), is that lower temperatures can be used in the extrusion coating process compared to standard low density polyethylene (LDPE).

As mentioned above the high melt strength polypropylene (HMS-PP) is a modified polypropylene. Accordingly, the high melt strength polypropylene (HMS-PP) can be further defined by the way obtained. The high melt strength polypropylene (HMS-PP) is preferably the result of treating an unmodified polypropylene with thermally decomposing radical-forming agents and/or with ionizing radiation. However, in such a case a high risk exists that the unmodified polypropylene is degraded, which is detrimental. Thus it is preferred that the modification is accomplished by the use of bifunctionally unsaturated monomer(s) and/or multifunctionally unsaturated low molecular weight polymer(s) as chemically bound bridging unit(s). A suitable method to obtain the high melt strength polypropylene (HMS-PP) is for instance disclosed in EP 0 787 750, EP 0 879 830 A1 and EP 0 890 612 A2. All documents are herewith included by reference. Thereby, the amount of peroxide is preferably in the range of 0.05 to 3.00 wt.-% based on the unmodified polypropylene.

Accordingly, in one preferred embodiment the high melt strength polypropylene (HMS-PP) comprises units derived from

(i) propylene and
(ii) bifunctionally unsaturated monomer(s) and/or multifunctionally unsaturated low molecular weight polymer(s).

"Bifunctionally unsaturated or multifunctionally unsaturated" as used above means preferably the presence of two or more non-aromatic double bonds, as in e.g. divinylbenzene or cyclopentadiene or polybutadiene. Only such bi- or multifunctionally unsaturated compounds are used which can be polymerized preferably with the aid of free radicals. The unsaturated sites in the bi- or multifunctionally unsaturated compounds are in their chemically bound state not actually "unsaturated", because the double bonds are each used for a covalent bond to the polymer chains of the unmodified polypropylene.

Reaction of the bifunctionally unsaturated monomer(s) and/or multifunctionally unsaturated low molecular weight polymer(s), preferably having a number average molecular weight ($M_n$)≤S 10000 g/mol, synthesized from one and/or more unsaturated monomers with the unmodified polypropylene may be performed in the presence of a thermally free radical forming agent, e. g. decomposing free radical-forming agent, like a thermally decomposable peroxide and/or ionizing radiation or microwave radiation.

The bifunctionally unsaturated monomers may be

- divinyl compounds, such as divinylaniline, m-divinylbenzene, p-divinylbenzene, divinylpentane and divinylpropane;
- allyl compounds, such as allyl acrylate, allyl methacrylate, allyl methyl maleate and allyl vinyl ether;
- dienes, such as 1,3-butadiene, chloroprene, cyclohexadiene, cyclopentadiene, 2,3-dimethylbutadiene, heptadiene, hexadiene, isoprene and 1,4-pentadiene;
- aromatic and/or aliphatic bis (maleimide) bis (citraconimide) and mixtures of these unsaturated monomers.

Especially preferred bifunctionally unsaturated monomers are 1,3-butadiene, isoprene, dimethyl butadiene and divinylbenzene.

The multifunctionally unsaturated low molecular weight polymer, preferably having a number average molecular weight ($M_n$)≤ 10000 g/mol may be synthesized from one or more unsaturated monomers.

Examples of such low molecular weight polymers are

- polybutadienes, especially where the different microstructures in the polymer chain, i.e. 1,4-cis, 1,4-trans and 1,2-(vinyl) are predominantly in the 1,2-(vinyl) configuration
- copolymers of butadiene and styrene having 1,2- (vinyl) in the polymer chain.

A preferred low molecular weight polymer is polybutadiene, in particular a polybutadiene having more than 50.0 wt.-% of the butadiene in the 1,2-(vinyl) configuration.

The high melt strength polypropylene (HMS-PP) may contain more than one bifunctionally unsaturated monomer and/or multifunctionally unsaturated low molecular weight polymer. Preferably the amount of bifunctionally unsaturated monomer(s) and multifunctionally unsaturated low molecular weight polymer(s) together in the high melt strength polypropylene (HMS-PP) 0.01 to 10.0 wt.-% based on said high melt strength polypropylene (HMS-PP).

As stated above it is preferred that the bifunctionally unsaturated monomer(s) and/or multifunctionally unsaturated low molecular weight polymer(s) are used in the presence of a thermally decomposing free radical-forming agent.

Peroxides are preferred thermally decomposing free radical-forming agents. More preferably the thermally decomposing free radical-forming agents are selected from the group consisting of acyl peroxide, alkyl peroxide, hydroperoxide, perester and peroxycarbonate.

The following listed peroxides are in particular preferred:

Acyl peroxides: benzoyl peroxide, 4-chlorobenzoyl peroxide, 3-methoxybenzoyl peroxide and/or methyl benzoyl peroxide.

Alkyl peroxides: allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.

Peresters and peroxy carbonates: butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also mixtures of these above listed free radical-forming agents may be used.

The unmodified polypropylene to prepare such a high melt strength polypropylene (HMS-PP) has preferably a melt flow rate $MFR_2$ (230 °C) in a range of 0.05 to 45.0 g/10 min.

Preferably the unmodified polypropylene is a propylene homopolymer.

After the preparation the high melt strength polypropylene (HMS-PP) may be subjected to modification steps to further modify the polymer. Such modification steps include, for instance, grafting, where one or more functional comonomers are grafted to the polypropylene chain; and visbreaking, where the molecular weight of the polypropylene is reduced by combining the polymer in molten state in the extruder with a free radical generator, such as a peroxide. Such steps are well known to the person skilled in the art and references to them may be found in the literature.

Finally, in case the polymer layer comprises a polypropylene (PP), more preferably comprises as a main component a polypropylene (PP), like the branched polypropylene (b-PP), e.g. the high melt strength polypropylene (HMS-PP), it is preferred that between the substrate and the polymer layer an adhesive layer is placed.

**Non-migratory slip agent (NM-SA) and anti-blocking agent (AB)**

Essential finding is that a combination of specific additives must be present in the polymer layer (PL) otherwise a reduction of coefficient of friction (COF) without compromising the adhesion properties of said layer is impossible.

The coefficient of friction (COF) is measure of the relative difficulty with which one surface will slide over the adjoining surface. The greater the resistance to sliding the higher is the coefficient of friction (COF) value.

It has been especially found that an anti-blocking agent together with a slip agent must be used, wherein said slip agent shows no or at least nearby no migration to the surface of the polymer layer (PL).

A typical property of slip agents is that they are relatively good miscible (at least during the extrusion) with the polymer into which they are incorporated. In contrast thereto anti-block agents are not miscible with the polymer to be mixed and normally remain solid during the extrusion process. A further remarkable characteristic of anti-block agents is that they are randomly distributed in the polymer layer and do not migrate over the time from the interior to the surface of the polymer layer. In turn, slip agents can be divided in two different classes, namely in slip agents which migrate over the time from the interior to the surface of the polymer layer and slip agents which behave similar to the anti-blocking agents, i.e. show no or nearby no migration tendencies. Accordingly it is especially appreciated that both, the slip agent as well as the anti-blocking agent shall not migrate over the live time of the polymer layer. A further difference between slip agents and anti-blocking agents is that the latter roughen the surface of polymer layers whereas slip agents when present on the surface layer act as lubricants.

Having said this, an anti-blocking agent (AB) and a non-migratory slip agent (NM-SA) are defined as follows.

In its broadest definition, an anti-blocking agent (AB) does not melt during the extrusion coating process. Accordingly, in a preferred embodiment the anti-blocking agent comprises, more preferably is, an inorganic material. In one preferred embodiment the anti-blocking agent (AB) is selected from the group consisting of natural silica, synthetic silica, talc, calcium carbonate, ceramic spheres (aluminium-silicate ceramic), kaolin, clay and mica. Accordingly, in one

specific embodiment either talc or natural/synthetic silica is used as anti-blocking agent (AB).

Preferably the anti-blocking agent (AB) being talc has a cutoff particle size d95 (Sedimentation) [mass percent] of equal or below 20 μm, more preferably below 10.0 μm, like below 8.0 μm.

In one embodiment the anti-blocking agent (AB) being silica, like amorphous silica, has a average particle size (Laser diffraction) of equal or below 20 μm, more preferably below 10.0 μm, like below 8.0 μm.

Preferably the amount of anti-blocking agent (AB) in the composition (Co) and/or in the polymer layer (PL) is in the range of 0.5 to 10.0 wt.-%, more preferably in the range of 0.5 to 8.0 wt.-%, based on the total amount of the composition (Co) and polymer layer (PL), respectively.

Slip agents are known to lower the coefficient of friction (COF) value due to their lubricating property. However commonly used slip agents are not suitable in the present extrusion coating process as they deteriorate at the temperatures applied in the process. Further it has been envisaged that frequently used migrating slip agents are detrimental in view of the adhesion requirement in extrusion coated articles.

Accordingly a further finding is that in addition to the anti-blocking agent (AB) a slip agent must be employed which show no or nearby no migration. Typical slip agents which easily migrate and thus not falling under the term "non-migrating slip agent (NM-SA)" are eucramide, oleamide, and stearamide, to mention a few among many other. Accordingly, in its broadest definition the term "non-migrating slip agent (NM-SA)" covers all slip agents excluding eucramide, oleamide, and stearamide, more preferably covers all slip agents excluding primary amides, like primary amides of fatty acids. Accordingly, in one preferred embodiment the non-migrating slip agent (NM-SA) is a secondary amide, like a secondary amide of fatty acid, or a polysiloxane. The term primary amide and secondary amide, respectively, are understood as commonly known, i.e. the primary amide is an unsubstituted amide ($RCONH_2$) whereas in the secondary amide one hydrogen is replaced by an organic residue ($RCONHR_1$).

It has been further found that a non-migrating slip agent (NM-SA) with rather high molecular weight is especially suitable. Accordingly, it is preferred that the non-migrating slip agent (NM-SA) has a molecular weight of at least 400 g/mol, more preferably of at least 500 g/mol, yet more preferably in the range of 400 to 1,000,000 g/mol, still more preferably in the range of 450 to 800,000 g/mol, still yet more preferably in the range of 450 to 800,000 g/mol, like in the range of 500 to 800,000 g/mol.

Preferably the non-migrating slip agent (NM-SA) has a rather high degradation temperature. Accordingly, it is preferred that the non-migrating slip agent (NM-SA) has degradation temperature of at least 200 °C, more preferably of at least 230 °C, yet more preferably of at least 260 °C, like of at least 270 °C.

In the following the two especially preferred non-migrating slip agents (NM-SA), i.e. the secondary amide, like the secondary amide of fatty acid, and the polysiloxane, are discussed separately.

Preferably said secondary amide, like the secondary amide of fatty acid, has a molecular weight of at least 400 g/mol, more preferably of at least 500 g/mol, yet more preferably is in the range of 400 to 1,000 g/mol, still more preferably in the range of 500 to 800 g/mol.

Still more preferably said secondary amide, like the secondary amide of fatty acid, has a melting temperature of at least 110 °C, more preferably of at least 115 °C, yet more preferably in the range of 115 to 200 °C, still more preferably in the range of 130 to 190 °C.

In one embodiment the secondary amide is a secondary amide of fatty acid, more preferably is a fatty acid amid derivative of formula (I)

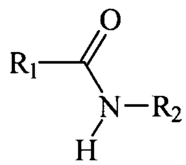

wherein

> $R_1$ is a $C_5$ to $C_{25}$ alkyl residue or $C_5$ to $C_{25}$ alkenyl residue,
> $R_2$ is a long-chain organic residue containing at least 6 carbon atoms,

The term "fatty acid amide derivative" indicates that the nitrogen atom of the amide group covers organic residues (-CONHR).

The term "long-chain organic residue" covers long chain aliphatic residues, like alkyl residues and alkenyl residues, as well as aliphatic residues comprising functional groups included in the chain, like -NH-CO-, NH-, -CO-, or -O-.

Typically, the fatty acid amid derivatives contain an unbranched long chain aliphatic residue. Thus, the residues of the fatty acid amid derivative are unbranched. More precisely the $C_5$ to $C_{25}$ alkyl residue or $C_5$ to $C_5$ alkenyl residue

and the specific embodiments thereof are unbranched.

The $R_1$ residue of the fatty acid amid derivative of formula (I) is preferably a $C_{10}$ to $C_{25}$ alkyl residue or $C_{10}$ to $C_{25}$ alkenyl residue.

The $R_2$ residue of the fatty acid amid derivative of formula (I) is preferably selected from the group consisting of an aliphatic amide derivative residue containing 6 to 30 carbon atoms, an aliphatic alkyl residue containing 6 to 30 carbon atoms, and an aliphatic alkenyl residue containing 6 to 30 carbon atoms.

Thus in one specific embodiment the $R_2$ residue is a $C_6$ to $C_{25}$ alkyl residue or a $C_6$ to $C_{25}$ alkenyl residue.

In another specific embodiment the $R_2$ residue is $R_4$-NH-CO-$R_5$, with

$R_4$ being a covalent bond or a $C_1$ to $C_6$ alkyl residue, like $-CH_2-$ or $-CH_2-CH_2-$, and

$R_5$ being a $C_5$ to $C_5$ alkyl residue or a $C_5$ to $C_5$ alkenyl residue, more preferably a $C_5$ to $C_{25}$ alkyl residue.

In one preferred embodiment the non-migratory slip agent (NM-SA) is a fatty acid amid derivative of formula (Ia)

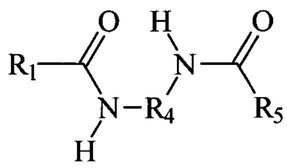

with

$R_1$ and $R_5$ being independently from each other a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n being a positive integer between 12 to 18, like 16, and $R_4$ being a $C_1$ to $C_6$ alkyl residue, preferably an unbranched $C_1$ to $C_6$ alkyl residue, more preferably $-CH_2-$ or $-CH_2-CH_2-$, still more preferably $-CH_2-CH_2-$.

It is especially preferred that $R_1$ and $R_5$ are identical and are $--(CH_2)_nCH_3$, with n being a positive integer between 12 to 18, like 16. Accordingly in preferred embodiment the fatty acid amid derivative of formula (Ia) as stated in the previous paragraph is N,N'-bisstearoylethylenediamide ($CH_3(CH_2)_{16}CONHCH_2CH_2NHCO(CH_2)_{16}CH_3$).

In another preferred embodiment the non-migratory slip agent (NM-SA) is a fatty acid amid derivative of formula (Ia)

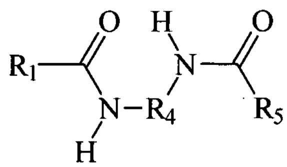

with

$R_1$ and $R_5$ being independently from each other a $C_5$ to $C_{25}$ alkenyl residue, more preferably an unbranched $C_5$ to $C_{25}$ alkenyl residue, still more preferably $-(CH_2)_xCH=CH(CH_2)_yCH_3$, with x = 4 to 15 and y = 3 to 10, preferably with x being a positive integer between 7 to 15 and y being a positive integer between 4 to 9.

$R_4$ being a $C_1$ to $C_6$ alkyl residue, preferably an unbranched $C_1$ to $C_6$ alkyl residue, more preferably $-CH_2-$ or $-CH_2-CH_2-$, still more preferably $-CH_2-CH_2-$.

It is especially preferred that $R_1$ and $R_5$ are identical and are $-(CH_2)_xCH=CH(CH_2)_yCH_3$, with x being positive integers between 4 to 15 and y being positive integers between 3 to 10, preferably with x being a positive integer between 7 to 15 and y being a positive integer between 4 to 9. Accordingly in preferred embodiment the fatty acid amid derivative is of formula (Ib) is N,N'-ethylene-bis-oleamide.

In still another preferred embodiment the non-migratory slip agent (NM-SA) is a fatty acid amid derivative of formula (Ib)

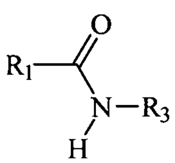

with

$R_1$ being a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n being a positive integer between 12 to 18, like 14, and $R_3$ being a $C_6$ to $C_{25}$ alkyl residue or $C_6$ to $C_{25}$ alkenyl residue, preferably a $C_6$ to $C_{25}$ alkenyl residue, more preferably a $-(CH_2)_xCH=CH(CH_2)_yCH_3$, with x being a positive integer between 4 to 15 and y being a positive integer between 3 to 10, preferably with x being a positive integer between 7 to 15 and y being a positive integer between 4 to 9.

Thus it is especially preferred that
$R_1$ is $-(CH_2)_nCH_3$, with n being a positive integer between 12 to 18, like 14, and
$R_3$ is $-(CH_2)_xCH=CH(CH_2)_yCH_3$, with x being a positive integer between 4 to 15 and y being a positive integer between 3 to 10, preferably with x being a positive integer between 7 to 15 and y being a positive integer between 4 to 9.

Accordingly, in one preferred embodiment the fatty acid amid derivative of formula (Ib) is N-9-octadecenyl hexadecanamide.

In yet another preferred embodiment the non-migratory slip agent (NM-SA) is a fatty acid amid derivative of formula (Ib)

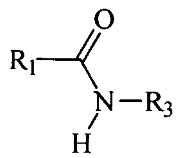

with

$R_1$ being a $C_5$ to $C_5$ alkenyl residue, preferably an unbranched $C_5$ to $C_5$ alkenyl residue, more preferably an unbranched $C_{10}$ to $C_{20}$ alkenyl residue, still more preferably-$(CH_2)_xCH=CH(CH_2)yCH_3$, with x a positive integer between 4 to 15 and y a positive integer between 3 to 10, preferably with x a positive integer between 7 to 15 and y a positive integer between 4 to 9,
$R_3$ being a $C_6$ to $C_{25}$ alkyl residue or $C_6$ to $C_{25}$ alkenyl residue, preferably a $C_6$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n a positive integer between 12 to 18, like 14.

Thus it is especially preferred that
$R_1$ is $-(CH_2)_xCH=CH(CH_2)_yCH_3$, with x a positive integer between 4 to 15 and y a positive integer between 3 to 10, preferably with x a positive integer between 7 to 15 and y a positive integer between 4 to 9, and
$R_3$ is $-(CH2)_nCH_3$, with n a positive integer between 12 to 18, like 14.

Accordingly, in preferred embodiment of the previous paragraph the fatty acid amid derivative of formula (Ib) is N-octadecyl-13-docosenamide

It is especially preferred that the non-migratory slip agent (NM-SA) is a fatty acid amid derivative of formula (Ia) and in particular is N,N'-bisstearoylethylenediamide ($CH_3(CH_2)_{16}CONHCH_2CH_2NHCO(CH_2)_{16}CH_3$).

Another preferred class of non-migratory slip agent (NM-SA) is the class of polysiloxanes.

In one embodiment the polysiloxanes describedhas a molecular weight of at least 400 g/mol, more preferably of at least 500 g/mol, yet more preferably is in the range of 500 to 1,000,000 g/mol, still more preferably in the range of 1,000 to 800,000 g/mol, still yet more preferably in the range of 2,000 to 800,000 g/mol, like in the range of 2,500 to 800,000 g/mol.

The polysiloxane may comprise just one repeating unit or at least two different, preferably two different, repeating units. Accordingly, the polysiloxane can be of formula (II) or (III) as defined below, preferably of formula (III).

Accordingly, in one embodiment the non-migratory slip agent (NM-SA) is a polysiloxane of formula (II)

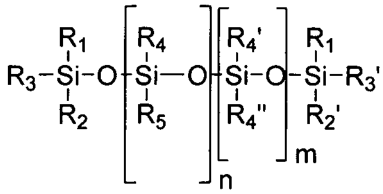

$R_1$, $R_{1'}$, $R_2$, $R_{2'}$, $R_3$, $R_{3'}$, $R_4$, $R_{4'}$ and $R_{4''}$ are independently from each other alkyl or aryl residues, like $-CH_3$, $-CH_2CH_3$, $C_3$-alkyl, $C_4$-alkyl, $C_5$-alkyl, and
$R_5$ is an organic group different to the other residues $R_{1'}$, $R_2$, $R_{2'}$, $R_3$, $R_{3'}$, $R_4$, $R_{4'}$ and $R_{4''}$, preferably is a $C_6$ to $C_{18}$ alkyl residue, a polyether residue, or a combination of a $C_6$ to $C_{18}$ alkyl residue and a polyether residue,
n is a positive integer from 0 to 500, preferably 1 to 500, and
m is a positive integer from 1 to 25.

In another embodiment the non-migratory slip agent (NM-SA) is a polysiloxane is of formula (II)

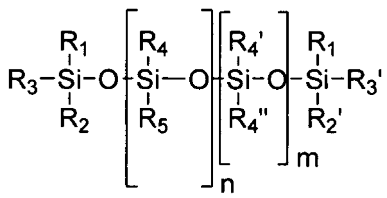

$R_1$, $R_{1'}$, $R_2$, $R_{2'}$, $R_3$, $R_{3'}$, $R_4$, $R_{4'}$ and $R_{4''}$ are identical alkyl residues, like $-CH_3$, $-CH_2CH_3$, $C_3$-alkyl, $C_4$-alkyl, $C_5$-alkyl, preferably are $-CH_3$, and
$R_5$ is a $C_6$ to $C_{18}$ alkyl residue,
n is a positive integer from 0 to 500, preferably 1 to 500, and
m is a positive integer from 1 to 25.

In still another embodiment the non-migratory slip agent (NM-SA) is a polysiloxane is of formula (II)

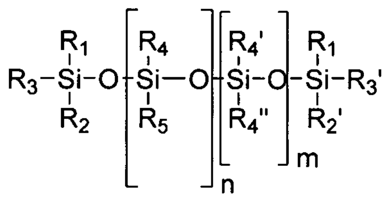

$R_1$, $R_1$, $R_2$, $R_{2'}$, $R_3$, $R_{3'}$, $R_4$, $R_{4'}$ and $R_{4''}$ are identical alkyl residues, like $-CH_3$, $-CH_2CH_3$, $C_3$-alkyl, $C_4$-alkyl, $C_5$-alkyl, preferably are $-CH_3$, and
$R_5$ is an organic group different to the other residues $R_{1'}$, $R_2$, $R_{2'}$, $R_3$, $R_{3'}$, $R_4$, $R_{4'}$ and $R_{4''}$, preferably is a $C_6$ to $C_{18}$ alkyl residue, a polyether residue, or a combination of a $C_6$ to $C_{18}$ alkyl residue and a polyether residue,
n is a positive integer from 0 to 500, preferably 1 to 500, and
m is a positive integer from 1 to 25.

In one embodiment the non-migratory slip agent (NM-SA) is a polysiloxane is of formula (III)

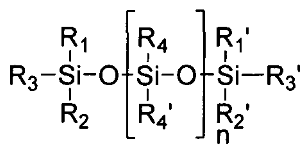

wherein

$R_1$, $R_{1'}$, $R_2$, $R_{2'}$, $R_3$, $R_{3'}$, $R_4$ and $R_4$, are independently from each other alkyl or aryl residues, like $-CH_3$, $-CH_2CH_3$, $C_3$-alkyl, $C_4$-alkyl, $C_5$-alkyl or phenyl, and
n is a positive integer from 30 to 500.

More preferably the non-migratory slip agent (NM-SA) is a polysiloxane of formula (III) wherein
$R_1$, $R_{1'}$, $R_2$, $R_{2'}$, $R_3$, and $R_{3'}$ are identical alkyl residues, like $-CH_3$, $-CH_2CH_3$, $C_3$-alkyl, $C_4$-alkyl, $C_5$-alkyl, preferably $-CH_3$,
$R_4$ and $R_{4'}$ are independently from each other alkyl or aryl residues, like $-CH_3$, $-CH_2CH_3$, $C_3$-alkyl, $C_4$-alkyl, $C_5$-alkyl or phenyl, and

n is a positive integer from 30 to 500.

More preferably the non-migratory slip agent (NM-SA) is a polysiloxane of formula (III) wherein $R_1$, $R_{1'}$, $R_2$, $R_{2'}$, $R_3$, and $R_{3'}$ are independently from each other alkyl residues, like $-CH_3$,$-CH_2CH_3$, $C_3$-alkyl, $C_4$-alkyl, $C_5$-alkyl, and $R_4$ and $R_4$, are aryl residues, like phenyl residues, and n is a positive integer from 30 to 500.

In another preferred embodiment the non-migratory slip agent (NM-SA) is a polysiloxane of formula (III) wherein $R_1$, $R_{1'}$, $R_2$, $R_{2'}$, $R_3$, and $R_{3'}$ are identical alkyl residues, like $-CH_3$, $-CH_2CH_3$, $C_3$-alkyl, $C_4$-alkyl, $C_5$-alkyl, preferably $-CH_3$, $R_4$ and $R_{4'}$ are aryl residues, like phenyl residues, and n is a positive integer from 30 to 500.

Yet more preferably the non-migratory slip agent (NM-SA) is a polysiloxane of formula (III) wherein $R_1$, $R_{1'}$, $R_2$, $R_{2'}$, $R_3$, and $R_{3'}$ are identical alkyl residues, like $-CH_3$, $-CH_2CH_3$, $C_3$-alkyl, $C_4$-alkyl, $C_5$-alkyl, preferably $-CH_3$, $R_4$ and $R_{4'}$ are independently from each other alkyl residues, like $-CH_3$, $-CH_2CH_3$, $C_3$-alkyl, $C_4$-alkyl, $C_5$-alkyl, and n is a positive integer from 30 to 500.

In yet another preferred embodiment the non-migratory slip agent (NM-SA) is a polysiloxane of formula (III) wherein $R_1$, $R_{1'}$, $R_2$, $R_{2'}$, $R_3$, $R_{3'}$ and $R_4$ are identical alkyl residues, like $-CH_3$, $-CH_2CH_3$, $C_3$-alkyl, $C_4$-alkyl, $C_5$-alkyl, preferably $-CH_3$, and $R_{4'}$ is different to the other residues $R_1$, $R_{1'}$, $R_2$, $R_{2'}$, $R_3$, $R_{3'}$ and $R_4$, preferably $R_{4'}$ is a different alkyl residues, like $-CH_3$, $-CH_2CH_3$, $C_3$-alkyl, $C_4$-alkyl, $C_5$-alkyl, and n is a positive integer from 30 to 500.

In still yet another preferred embodiment the non-migratory slip agent (NM-SA) is a polysiloxane of formula (III) wherein $R_1$, $R_{1'}$, $R_2$, $R_{2'}$, $R_3$, $R_{3'}$ and $R_4$ are $-CH_3$, and $R_{4'}$ is $-CH_2CH_3$, $C_3$-alkyl, $C_4$-alkyl, $C_5$-alkyl or phenyl, and n is a positive integer from 30 to 500.

In a specific embodiment the non-migratory slip agent (NM-SA) is a polysiloxane of formula (III) wherein $R_1$, $R_{1'}$, $R_2$, $R_{2'}$, $R_3$, $R_{3'}$ $R_4$, and $R_{4'}$ are identical alkyl residues, like $-CH_3$, $-CH_2CH_3$, $C_3$-alkyl, $C_4$-alkyl, $C_5$-alkyl, preferably $-CH_3$, and n is a positive integer from 30 to 500, preferably from 90 to 410.

It is preferred that the non-migratory slip agent (NM-SA) being a polysiloxane, in particular being a polysiloxane of formula (III), is added to the polyolefin (PO) as a masterbatch. Such a masterbatch contains the non-migratory slip agent (NM-SA) and a polymer, like polyethylene or polypropylene. In this context it needs to be mentioned that in case the composition (Co) shall consist of a polyolefin (PO) and a non-migratory slip agent (NM-SA) , this formulation does not exclude the option that the non-migratory slip agent (NM-SA) is added as a masterbatch. In other words the term non-migratory slip agent (NM-SA) is understood broadly, i.e. covering also a masterbatch containing a non-migratory slip agent (NM-SA).

Preferably the amount of non-migratory slip agent (NM-SA) in the composition (Co) and/or in the polymer layer is in the range of 0.05 to 8.0 wt.-%, more preferably in the range of 0.1 to 6.0 wt.-% based on the total amount of the composition (Co) and polymer layer, respectively.

Preferably the weight ratio between the non-migratory slip agent (NM-SA) and the anti-blocking agent (AB) [(NM-SA)/(AB)] is in the range of 10/1 to 1/10.

The composition (Co) described may be prepared by compounding the components within suitable melt mixing devices for preparing polymeric compounds, including in particular extruders, like single screw extruders as well as twin screw extruders. The compounding may be done separately, so that the additives are mixed with the polymer which then is granulated and the granulates are subsequently used in extrusion coating. However, it may also be conducted on-line so that the non-migratory slip agent (NM-SA) and the anti-blocking agent (AB) are added to the extruder which extrudes the composition (Co) onto the substrate (S). Other suitable melt mixing devices include planet extruders and single screw co-kneaders.

As mentioned above, not only an article comprising the composition (Co) and the manufacture of said article is described but also to the use of a non-migratory slip agent (NM-SA) together with an anti-blocking agent (AB) in a polymer layer (PL) being extrusion coated on a substrate (S) for reducing the coefficient of friction (COF) of said polymer layer (PL), wherein the coefficient of friction (COF) must be below 0.5, more preferably below 0.3, like below 0.2er.

Additionally, it is preferred that the use of the non-migratory slip agent (NM-SA) together with the anti-blocking agent (AB) for reduction of the coefficient of friction (COF) does not compromise the adhesion performance of the polymer layer (PL), wherein the adhesion performance is at least 4 after 31 days of preparation of the polymer layer (PL).

Preferred embodiments of the non-migratory slip agent (NM-SA), of the anti-blocking agent (AB), of the polymer layer, of the substrate, of the composition (Co) for producing the polymer layer (PL) reference is made to the information provided above.

The articles describedhave advantageous properties, such as improved scratch resistance, good abrasion

resistance, good release properties and consistent adhesion and friction properties. The articles describedcan easily be formed and machined in various industrial processes without problems such as jamming or misformation in the production line. Furthermore, the advantageous properties of the polymers, such as the sealing properties, are not deteriorated by the migration of the non-migratory slip agent (NM-SA) and the anti-blocking agent (AB), respectively, to the sealing surfaces. Therefore, the described subject-matter is especially suitable in the production of metal cans where the coated metal sheets are transferred and subjected to, among others, different stamping and bending steps.

## EXAMPLES

### A. Measuring methods

The following definitions of terms and determination methods apply for the above general description as well as to the below examples unless otherwise defined.

**Comonomer content in polyethylene** was measured in a known manner based on Fourier transform infrared spectroscopy (FTIR) calibrated with $^{13}C$-NMR, using Nicolet Magna 550 IR spectrometer together with Nicolet Omnic FTIR software.

Films having a thickness of about 250 μm were compression molded from the samples. Similar films were made from calibration samples having a known content of the comonomer. The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

### Comonomer content in polypropylene

The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of 250 μm and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Propylene-1-butene-copolymers were evaluated at 767 $cm^{-1}$.Quantitative results are obtained based upon reference to the film thickness.

### Melt Flow Rate (MFR)

The melt flow rates are measured with a load of 2.16 kg ($MFR_2$) at 190 °C. The melt flow rate is that quantity of polymer in grams which the test apparatus standardised to ISO 1133 extrudes within 10 minutes at a temperature of 190 °C and 230 °, respectively, under a load of 2.16 kg.

### Molecular weight averages, molecular weight distribution, branching index (Mn, Mw, MWD, g') determined by SEC/VISC-LS

Molecular weight averages (Mw, Mn), molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4 2003. A PL 220 (Polymer Laboratories) GPC equipped with a refractive index (RI), an online four capillary bridge viscometer (PL-BV 400-HT), and a dual light scattering detector (PL-LS 15/90 light scattering detector) with a 15° and 90° angle was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 μL of sample solution were injected per analysis. The corresponding detector constants as well as the inter detector delay volumes were determined with a narrow PS standard (MWD = 1.01) with a molar mass of 132900 g/mol and a viscosity of 0.4789 dl/g. The corresponding dn/dc for the used PS standard in TCB is 0,053 $cm^3/g$.

The molar mass at each elution slice was determined by light scattering using a combination of two angels 15° and 90°. All data processing and calculation was performed using the Cirrus Multi-Offline SEC-Software Version 3.2 (Polymer Laboratories a Varian inc. Company). The molecular weight was calculated using the option in the Cirrus software "use combination of LS angles" in the field "sample calculation options subfield slice MW data from".

The data processing is described in details in G. Saunders, P. A. G: Cormack, S. Graham; D. C. Sherrington,

Macromolecules, 2005, 38, 6418-6422. Therein the $Mw_i$ at each slice is determined by the 90° angle by the following equation:

$$Mw_i = \frac{K_{LS} * R(\theta)^{90°}}{\frac{dn}{dc} * R * P(\theta)}$$

The Rayleigh ratio $R(\theta)^{90°}$ of the 90° angle is measured by the LS detector and R is the response of the RI-detector. The particle scatter function $P(\theta)$ is determined by the usage of both angles (15° and 90°) as described by C. Jackson and H. G. Barth(C. Jackson and H. G. Barth, "Molecular Weight Sensitive Detectors" in Handbook of Size Exclusion Chromatography and related techniques, C.-S. Wu, 2nd ed., Marcel Dekker, New York, 2004, p.103). For the low and high molecular region in which less signal of the LS detector or RI detector respectively was achieved a linear fit was used to correlate the elution volume to the corresponding molecular weight.

The dn/dc used in the equation is calculated from the detector constant of the RI detector, the concentration c of the sample and the area of the detector response of the analysed sample. The relative amount of branching is determined using the g'-index of the branched polymer sample. The long chain branching (LCB) index is defined as $g' = [\eta]_{br}/[\eta]_{lin}$. It is well known if the g' value increases the branching content decreases. $[\eta]$ is the intrinsic viscosity at 160 °C in trichloorbenzene of the polymer sample at a certain molecular weight and is measured by an online viscosity and a concentration detector. The intrinsic viscosities were measured as described in the handbook of the Cirrus Multi-Offline SEC-Software Version 3.2 with use of the Solomon-Gatesman equation.

The necessary concentration of each elution slice is determined by a RI detector.

$[\eta]_{lin}$ is the intrinsic viscosity of a linear sample and $[\eta]_{br}$ the viscosity of a branched sample of the same molecular weight and chemical composition. The number average of $g'_n$ and the weight average $g'_w$ are defined as:

$$g'_n = \frac{\sum_0^i a_i * \frac{[\eta]_{br,i}}{[\eta]_{lin,i}}}{\sum a_i}$$

$$g'_w = \frac{\sum_0^i A_i * \frac{[\eta]_{br,i}}{[\eta]_{lin,i}}}{\sum_0^i A_i * \left(\frac{[\eta]_{br,i}}{[\eta]_{lin,i}}\right)^2}$$

where $a_i$ is dW/dlogM of fraction i and $A_i$ is the cumulative dW/dlogM of the polymer up to fraction i. The $[\eta]_{lin}$ of the linear reference (linear isotactic PP) over the molecular weight was measured with an online viscosity detector. Following K and $\alpha$ values were obtained ($K = 30.68*10^{-3}$ and $\alpha = 0.681$) from the linear reference in the molecular weight range of logM= 4.5-6.1. The $[\eta]_{lin}$ per slice molecular weight for the g' calculations was calculated by following relationship $[\eta]_{lin,i} = K*M_i^{\alpha}$. $[\eta]_{br,i}$ was measured for each particular sample by online viscosity and concentration detector.

**Median particle size d50 (Laser diffraction)** is calculated from the particle size distribution [mass percent] as determined by laser diffraction (Malvern) according to ISO 13320-1.

**Cutoff particle size d95 (Sedimentation)** is calculated from the particle size distribution [mass percent] as determined by gravitational liquid sedimentation according to ISO 13317-3

(Sedigraph)

**Density**

The density was measured according to ISO 1183-2. The sample preparation was executed according to ISO 1872-2 Table 3 Q (compression moulding).

**The gel content** is assumed to be identical to the xylene hot insoluble (XHI) fraction, which is determined by extracting 1 g of finely cut polymer sample with 350 ml xylene in a Soxhlet extractor for 48 hours at the boiling temperature. The remaining solid amount is dried at 90°C and weighed for determining the insolubles amount.

**Strain hardening factor (SHF)**

The strain hardening factor is defined as

$$SHF = \frac{\eta_E^+(t,\dot{\varepsilon})}{\eta_{LVE}^+(t)} = \frac{\eta_E^+(t,\dot{\varepsilon})}{3\eta^+(t)}$$

wherein

$\eta_E^+(t,\dot{\varepsilon})$ is the uniaxial extensional viscosity; and $\eta_{LVE}^+(t)$ is three times the time dependent shear viscosity $\eta^+(t)$ in the linear range of deformation.

The determination of the linear viscoelastic envelop in extension $\eta_{LVE}^+(t)$, using IRIS Rheo Hub 2008, required the calculation of the discrete relaxation time spectrum from the storage and loss modulus data (G', G" (ω)). The linear viscoelastic data (G', G" (ω)) is obtained by frequency sweep measurements undertaken at 180 °C for polypropylene or at 140 ° for polyethylene , on a Anton Paar MCR 300 coupled with 25 mm parallel plates. The underlying calculation principles used for the determination of the discrete relaxation spectrum are described in Baumgärtel M, Winter HH, "Determination of the discrete relaxation and retardation time spectra from dynamic mechanical data", Rheol.Acta 28:511519 (1989) which is incorporated by reference in its entirety.

IRIS RheoHub 2008 expresses the relaxation time spectrum as a sum of N Maxwell modes

$$\overset{o}{G}(t) = G_e \cdot \sum_1^N g_i \cdot e^{-\frac{t}{\lambda_i}}$$

wherein $g_i$ *and* $\lambda_i$ are material parameters and $G_e$ is the equilibrium modulus.

The choice for the maximum number of modes, *N* used for determination of the discrete relaxation spectrum, is done by using the option "optimum" from IRIS RheoHub 2008. The equilibrium modulus $G_e$ was set at zero. The non-linear fitting used to obtain $\eta_{LVE}^+(t)$ is performed on IRIS Rheo Hub 2008, using the Doi-Edwards model.

The uniaxial extensional viscosity, $\eta_E^+(t,\dot{\varepsilon})$ is obtained from uniaxial extensional flow measurements, conducted on an Anton Paar MCR 501 coupled with the Sentmanat extensional fixture (SER-1). The temperature for the uniaxial extensional flow measurements was set at 180°C, applying extension (strain) rates $\partial\varepsilon/\partial t$ ranging from 0.3 $s^{-1}$ to 10 $s^{-1}$ and covering a range of Hencky strain

$$\varepsilon = \ln [(l - l_0) / l_0],$$

with $l_o$ being the original and l the actual sample fixation length, from 0.3 to 3.0. Particularly care was taken for the preparation of the samples for extensional flow. The samples were prepared by compression moulding at 230 °C followed by slow cooling to room temperature (forced water or air cooling were not used). This procedure allowed obtaining well shaped samples free of residual stresses. The sample was left for some minutes at the testing temperature to ensure thermal stability (set temperature ±0,1 °C), before carrying out the uniaxial extensional flow measurements.

**Coefficient of Friction (CoF)**

The dynamic Coefficient of Friction (CoF) as a measure of the frictional behaviour of the film was determined using a method according to ISO 8295:1995 and ASTM D1894-11 as described below.

The apparatus was similar as shown in Figure 1(c) of ASTM D1894. Three samples of size 210×297 mm were cut in machine direction from the coated material and they were thermostated at 23 °C for at least 16 hours. The test was also conducted at this temperature. The sample was fastened to the table so that the machine direction of the sample coincides with the direction in which the sled moves during the test. An aluminium foil having a size of 65×140 mm was fastened to the sled. The foil was inspected to see that it was free of wrinkles. The weight of the sled (including the foil) was 200 grams ±2 grams. The sled was connected to the load cell of Instron universal testing machine as shown in Figure 1(c) of ASTM D1894. The sled was then pulled with a constant speed (100 mm/min) along the table. The recording from the load cell was then collected over time. An average force that was required to keep the sled

moving, i.e., the dynamic friction force $F_f$ was then determined as described in paragraph 9.2 of ISO 8295:1995. The dynamic coefficient of friction was then calculated as described in ISO 8295:1995, i.e. $COF = \frac{F_f}{w \cdot g}$, where $F_f$ is the dynamic friction force in N, w is the weight of the sled in kg and g is the gravitational constant 9.81 $m/s^2$. Three replicate runs were conducted. If any information were missing from the above-mentioned description then the information given in ISO 8295:1995 should be used for experimental conditions and ASTM D1894, Figure 1 and paragraph 5 for the apparatus. **The adhesion test** is made for evaluating the adhesion between the substrate and the coating. The coating and the substrate were manually torn from each other. Same operator tested the samples of the comparative example and the example. A ranking from 1 to 5 was given as follows:

1 The coating peels very easily from the substrate. The coating does not tear the substrate at all when separated.
2 The coating can be separated from the substrate easily but parts of the substrate follow with the separated coating.
3 The coating is adhered almost completely to the substrate but can still be peeled off from small areas.
4 The coating is adhered well to the substrate. It may be possible by slow tearing to remove the coating from small areas.
5 It is not possible to separate the coating and the substrate. Attempts will result in tearing of the substrate.

**Draw down speed** DD (10g/$m^2$) was determined by keeping the coating weight constant (10 g/ $m^2$) during the testing period. The starting line speed was 100 m/min and it was increased stepwise with steps of 100 m/min in five seconds time until the film breaks or 600 m/min was reached.

**B. Examples**

HMS-PP is the commercial ethylene HMS-PP homopolymer WF420HMS of Borealis AG with following properties: The reactively modified high melt strength polypropylene has a density of 905 kg/$m^3$, an MFR (230°C/2, 16kg) of 22 g/10min, a melting point Tm according to DSC of 164 °C and the following rheological properties in extension: strain-hardening factor SHF (180°C) of 2.03 at a strain rate of $3s^{-1}$ and a Hencky strain of 2.5.
ESA is the commercial erucamide "Finawax-E" of Fine Organics,
BSA is the commercial NN'-bisstearoylethylenediamide "Crodamide EBS" of Croda Chemical
PDS is the commercial masterbatch "Polybatch Superslip" ILPE 10020 of A. Schulman containing polydimethylsiloxane with a decomposition temperature of 280 °C.
Talc is the commercial product Talc HM 2 of IMI.
Silica is the commercial masterbatch "Polybatch AB-5" of A. Schulman containing polyethylene and synthetic silica
ADH is the commercial adhesive AT 2059 of Mitsui which is a MAH-grafted propylene polymer having an $MFR_2$ of 22 g/10 min, a density of 0.88 g/$cm^3$ and a Vicat softening point of 131 °C.
AL is the substrate which was an aluminium sheet having a thickness of 200 μm Extrusion coating runs were made on Beloit coextrusion coating line. It had Peter Cloeren's EBR die and a five layer feed block. The line speed was maintained at 150 m/min. The structure was aluminium (200 μm)- adhesion layer (3 μm) - HMS-PP (4 μm) - HMS-PP* (4 μm). The HMS-PP* layer contained the non-migratory slip agent (NM-SA) and the anti-blocking agent (AB).

In the coating line above aluminium sheet was coated with a layer of a composition (Co), i.e. a composition containing HMS-PP, NM-SA, and AB, and an adhesion layer. The temperature of the adhesion plastic at the die was about 280 °C, the temperature of the HMS-PP layer was 270 °C and the temperature of the composition (Co), i.e. the composition containing HMS-PP, NM-SA, and AB, was 255 °C. The temperature of the chill roll was 15°C.

**Inventive Example 1:**

The composition was made by mixing HMS PP in an amount of 94.2 parts per weight, Talc in an amount of 1.8 parts per weight and BSA in an amount of 4 parts per weight in an extruder. The above-described composition was used in the extrusion coating as the HMS-PP* layer as disclosed above.

**Inventive Example 2**:

The composition was made by mixing HMS PP in an amount of 91 parts per weight, PDS in an amount of 6 parts per weight and Silica in an amount of 3 parts per weight in an extruder. The above-described composition was

used in the extrusion coating as the HMS-PP* layer as disclosed above.

**Comparative Example**:

The composition was made by mixing HMS PP in an amount of 98 parts per weight, ESA in an amount of 0.25 parts per weight and Talc in an amount of 1.7 parts per weight in an extruder. The above-described composition was used in the extrusion coating in place of the HMS-PP* layer as disclosed above

**Table 1**: Content of Additives in the coated polymer layer and properties

| | | CE | IE 1 | IE 2 |
|---|---|---|---|---|
| HMS-PP | [wt.-] | 98.05 | 94.2 | 91 |
| Talc (AB) | [wt.-] | 1.70 | 1.8 | - |
| Silica (AB) | [wt.-] | - | - | 3.0 |
| ESA (M-SA) | [wt.-] | 0.25 | - | - |
| BSA (NM-SA) | [wt.-] | - | 4.00 | - |
| PDS (NM-SA) | [wt.-] | - | - | 6.0 |
| COF initial | [-] | 0,7 | 0.3 | 0.2 |
| | | | | |
| Adhesion initial | [-] | 4 | 5 | 5 |
| Adhesion after 31 days | [-] | 1 | 4 | 5 |

AB anti-blocking agent (AB)
M-SA migratory slip agent
NM-SA non-migratory slip agent (NM-SA)

## Claims

1. Article comprising a substrate (S) and a polymer layer (PL), said polymer layer (PL) is extrusion coated on the substrate (S), wherein

    (a) said substrate (S) is a metal (M);
    (b) the polymer layer (PL) comprises a composition (Co) comprising

        (b1) polyolefin (PO),
        (b2) a non-migratory slip agent (NM-SA), and
        (b3) an anti-blocking agent (AB);

    (c) the non-migratory slip agent (NM-SA) is selected from

        (i) polysiloxane
        or
        (ii) secondary amid of fatty acid; and

    (d) the antiblocking agent (AB) is an inorganic material.

2. Article according to claim 1, wherein

    (A)

        (a) the polyolefin (PO) is a polyethylene (PE) and/or a polypropylene (PP);
        and/or

(b) the metal (M) is selected from the group consisting of iron, iron alloy, like steel, copper, copper alloy, aluminum, and aluminum alloy;

and/or
(B)

(a) the article comprises between the substrate (S) and the polymer layer (PL) an adhesion layer (AL); and/or
(b) the polymer layer (PL) is the surface layer of the article.

**3.** Article according to one of the preceding claims, wherein polyolefin (PO) is a polyethylene (PE) having

(a) a melt flow rate $MFR_2$ (190 °C) measured according to ISO 1133 of at least 2.5 g/10min;
and/or
(b) a strain hardening factor (SHF) of at least 2.0 measured at a strain rate of 3.0 $s^{-1}$ and a Hencky strain of 2.5 (140 °C); and/or
(c) a branched structure.

**4.** Article according to one of the preceding claims 1 to 3, wherein polyolefin (PO) is a polypropylene (PP) having

(a) a melt flow rate $MFR_2$ (230 °C) measured according to ISO 1133 of at least 2.0 g/10min;
and/or
(b) a strain hardening factor (SHF) of at least 1.7 measured at a strain rate of 3.0 $s^{-1}$ and a Hencky strain of 2.5 (180 °C);
and/or
(c) a branched structure.

**5.** Article according to one of the preceding claims, wherein the amount of

(a) the non-migratory slip agent (NM-SA) in the composition (Co) is in the range of 0.05 to 8.0 wt.-% based on the total amount of the composition (Co);
and/or
(b) the non-migratory slip agent (NM-SA) has a molecular weight of at least 400 g/mol;
and/or
(c) the anti-blocking agent (AB) in the composition (Co) is in the range of 0.5 to 10.0 wt.-% based on the total amount of the composition (Co);

**6.** Article according to one of the preceding claims, wherein the non-migratory slip agent (NM-SA) is

(a) a polysiloxane,
(b) preferably a polysiloxane of formula (III)

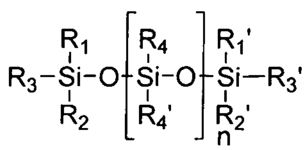

wherein

$R_1$, $R_{1'}$, $R_2$, $R_{2'}$, $R_3$, $R_{3'}$, $R_4$ and $R_{4'}$ are independently from each other alkyl or aryl residues, like $-CH_3$, $-CH_2CH_3$, $C_3$-alkyl, $C_4$-alkyl, $C_5$-alkyl or phenyl, and
n is a positive integer from 30 to 500

(c) more preferably a polysiloxane of formula (III)

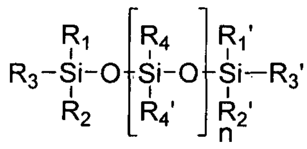

wherein

$R_1$, $R_{1'}$, $R_2$, $R_{2'}$, $R_3$, $R_{3'}$ $R_4$, and $R_{4'}$ are identical alkyl residues, like $-CH_3$,$-CH_2CH_3$, $C_3$-alkyl, $C_4$-alkyl, $C_5$-alkyl, preferably $-CH_3$, and
n is a positive integer from 30 to 500, preferably from 90 to 410.

**7.** Article according to claim 5, wherein the non-migratory slip agent (NM-SA) is a secondary amid of fatty acid, preferably the non-migratory slip agent (NM-SA) is

(a) a fatty acid amid derivative of formula (I)

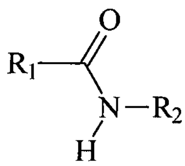

with

$R_1$ is a $C_5$ to $C_{25}$ alkyl residue or $C_5$ to $C_{25}$ alkenyl residue,
$R_2$ is a long-chain organic residue containing at least 6 carbon atoms.

or preferably
(b) a fatty acid amid derivative of formula (Ia)

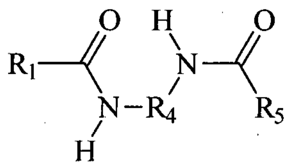

with

$R_1$ and $R_5$ being independently from each other a $C_5$ to $C_{25}$ alkyl residue,
$R_4$ being a $C_1$ to $C_6$ alkyl residue,

or more preferably
(c) N,N'-bisstearoylethylenediamide.

**8.** Article according to one of the preceding claims, wherein the polymer layer (PL) has a thickness in the range of 5 to 1,000 μm.

**9.** A process of extrusion coating a substrate by extruding a composition (Co) in a molten state through a flat die onto said substrate (S) at a temperature of from 220 to 280 °C thereby forming a polymer layer (PL) on said substrate (S), wherein

(a) said substrate (S) is a metal (M);
and
(b) the composition (Co) comprises

(b1) polyolefin (PO),
(b2) a non-migratory slip agent (NM-SA), and
(b3) an anti-blocking agent (AB);

(c) the non-migratory slip agent (NM-SA) is selected from

(iii) polysiloxane
or
(iv) secondary amid of fatty acid; and

(d) the antiblocking agent (AB) is an inorganic material

wherein optionally, the coated substrate is subsequently formed into cans, like beverage cans or tin cans.

**10.** Process according to claim 9, wherein

(a) the metal (M) is selected from the group consisting of iron, iron alloy, like steel, copper, copper alloy, aluminum, and aluminum alloy
(b) the polyolefin (PO) is a polyethylene (PE) and/or a polypropylene (PP), wherein preferably

(b1) the polyolefin (PO) is polyethylene (PE) having

(b1-1) a melt flow rate $MFR_2$ (190 °C) measured according to ISO 1133 of at least 2.5 g/10min, and/or
(b1-2) a strain hardening factor (SHF) of at least 2.0 measured at a strain rate of 3.0 $s^{-1}$ and a Hencky strain of 2.5 (140 °C),

or
(b2) the polyolefin (PO) is a polypropylene (PP) having

(b2-1) a melt flow rate $MFR_2$ (230 °C) measured according to ISO 1133 of at least 2.0 g/10min, and/or
(b2-2) a strain hardening factor (SHF) of at least 1.7 measured at a strain rate of 3.0 $s^{-1}$ and a Hencky strain of 2.5 (180 °C).

**11.** Process according to claim 9 or 10, wherein

(a) the amount of

(a1) the non-migratory slip agent (NM-SA) in the composition (Co) is in the range of 0.05 to 8.0 wt.-% based on the total amount of the composition (Co),
and/or
(a2) the anti-blocking agent (AB) in the composition (Co) is in the range of 0.5 to 10.0 wt.-% based on the total amount of the composition (Co),

and/or
(b) the non-migratory slip agent (NM-SA) is

(b1) a fatty acid amid derivative

(b1.1) of formula (I)

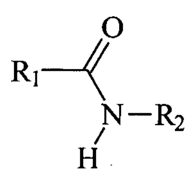

with

$R_1$ is a $C_5$ to $C_{25}$ alkyl residue or $C_5$ to $C_{25}$ alkenyl residue,
$R_2$ is a long-chain organic residue containing at least 6 carbon atoms.

or
(b1.2) preferably of formula (Ia)

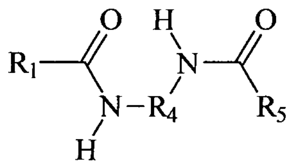

with

$R_1$ and $R_5$ being independently from each other a $C_5$ to $C_{25}$ alkyl residue,
$R_4$ being a $C_1$ to $C_6$ alkyl residue,

or
(b1.3) more preferably being N,N'-bisstearoylethylenediamide,

or
(b2) a polysiloxane

(b2.1) of formula (III)

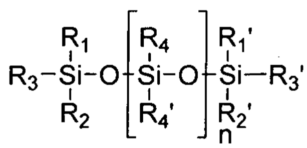

wherein

$R_1$, $R_{1'}$, $R_2$, $R_{2'}$, $R_3$, $R_{3'}$, $R_4$ and $R_{4'}$ are independently from each other alkyl or aryl residues, like $-CH_3$, $-CH_2CH_3$, $C_3$-alkyl, $C_4$-alkyl, $C_5$-alkyl or phenyl, and
n is a positive integer from 30 to 500,

or
(b2.2) preferably of formula (III)

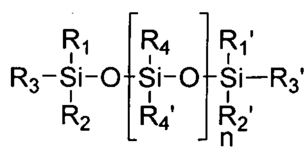

wherein

$R_1$, $R_{1'}$, $R_2$, $R_{2'}$, $R_3$, $R_{3'}$ $R_4$, and $R_{4'}$ are identical alkyl residues, like $-CH_3$, $-CH_2CH_3$, $C_3$-alkyl, $C_4$-alkyl, $C_5$-alkyl, preferably $-CH_3$, and
n is a positive integer from 30 to 500, preferably from 90 to 410,

or
(b2.3) more preferably being polydimethylsiloxane with a molecular weight of at least 400 g/mol.

**12.** Use of a non-migratory slip agent (NM-SA) together with an anti-blocking agent (AB) in a polymer layer (PL) being extrusion coated on a substrate (S) being a metal (M) to reduce the coefficient of friction (COF) of said polymer layer (PL), wherein the coefficient of friction (COF) is below 0.5,
wherein the non-migratory slip agent (NM-SA) is selected from

(a) polysiloxane
or
(b) secondary amid of fatty acid, and

wherein the antiblocking agent (AB) is an inorganic material.

**13.** Use according to claim 12, wherein the non-migratory slip agent (NM-SA) together with the anti-blocking agent (AB) does not compromise the adhesion performance of said polymer layer (PL), the adhesion performance is at least 4 after 31 days of preparation of the polymer layer (PL).

**14.** Use of a composition (Co) to coat substrate (S) thereby the composition forming a polymer layer (PL) on said substrate (S), wherein the polymer layer is the surface layer, wherein further

(a) said substrate (S) is a metal (M);
and
(b) the composition (Co) comprises

(b1) polyolefin (PO),
(b2) a non-migratory slip agent (NM-SA) selected from

(i) polysiloxane
or
(ii) secondary amid of fatty acid, and

(b3) an anti-blocking agent (AB) being an inorganic material.

**15.** Use according to claim 14, wherein the polyolefin (PO), the non-migratory slip agent (NM-SA), and/or the anti-blocking agent (AB) are further defined as in claim 16 and/or 17.

**16.** Use according to claim 14 or 15, wherein the polymer layer (PL) comprises in addition to the slip agent (SA) a polyolefin (PO), wherein further

(a) the polyolefin (PO) is polyethylene (PE) having

(a1) a melt flow rate $MFR_2$ (190 °C) measured according to ISO 1133 of at least 2.5 g/10min,
and/or
(a2) a strain hardening factor (SHF) of at least 2.0 measured at a strain rate of 3.0 $s^{-1}$ and a Hencky strain of 2.5 (140 °C),

or
(b) the polyolefin (PO) is a polypropylene (PP) having

(b2) a melt flow rate $MFR_2$ (230 °C) measured according to ISO 1133 of at least 5.0 g/10min,
and/or
(b2) a strain hardening factor (SHF) of at least 1.7 measured at a strain rate of 3.0 $s^{-1}$ and a Hencky strain of 2.5 (180 °C).

**17.** Use according to one the preceding claims 14 to 16, wherein

(a) the amount of

(a1) the non-migratory slip agent (NM-SA) in the composition (Co) and/or polymer layer (PL) is in the range of 0.05 to 8.0 wt.-% based on the total amount of the composition (Co),

and/or
(a2) the anti-blocking agent (AB) in the composition (Co) and/or in the polymer layer (PL) is in the range of 0.5 to 10.0 wt.-% based on the total amount of the composition (Co),

and/or
(b) the non-migratory slip agent (NM-SA) is

(b1) a fatty acid amid derivative

(b1.1) of formula (I)

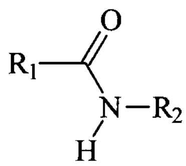

with

$R_1$ is a $C_5$ to $C_{25}$ alkyl residue or $C_5$ to $C_{25}$ alkenyl residue,
$R_2$ is a long-chain organic residue containing at least 6 carbon atoms.

or
(b 1.2) preferably of formula (Ia)

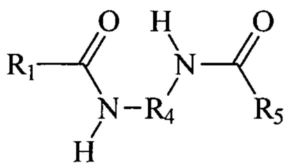

with

$R_1$ and $R_5$ being independently from each other a $C_5$ to $C_{25}$ alkyl residue,
$R_4$ being a $C_1$ to $C_6$ alkyl residue,

or
(b1.3) more preferably being N,N'-bisstearoylethylenediamide, or

(b2) a polysiloxane

(b2.1) of formula (III)

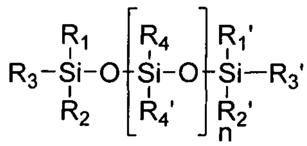

wherein

$R_1$, $R_{1'}$, $R_2$, $R_{2'}$, $R_3$, $R_{3'}$, $R_4$ and $R_{4'}$ are independently from each other alkyl or aryl residues, like $-CH_3$, $-CH_2CH_3$, $C_3$-alkyl, $C_4$-alkyl, $C_5$-alkyl or phenyl, and
n is a positive integer from 30 to 500,

or

(b2.2) preferably of formula (III)

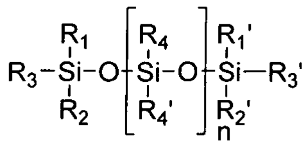

wherein

$R_1$, $R_{1'}$, $R_2$, $R_{2'}$, $R_3$, $R_{3'}$ $R_4$, and $R_{4'}$ are identical alkyl residues, like $-CH_3$, $-CH_2CH_3$, $C_3$-alkyl, $C_4$-alkyl, $C_5$-alkyl, preferably $-CH_3$, and
n is a positive integer from 30 to 500, preferably from 90 to 410,

or

(b2.3) more preferably being polydimethylsiloxane with a molecular weight of at least 400 g/mol.

## Patentansprüche

**1.** Gegenstand, umfassend ein Substrat (S) und eine Polymer-Schicht (PL), wobei die Polymer-Schicht (PL) auf dem Substrat (S) Extrusions-beschichtet ist, wobei

(a) das Substrat (S) ein Metall (M) ist;

(b) die Polymer-Schicht (PL) eine Zusammensetzung (Co) umfasst, umfassend

(b1) Polyolefin (PO),

(b2) ein nicht-migratorisches Gleitmittel (NM-SA), und

(b3) ein Anti-Blockierungsmittel (AB);

(c) das nicht-migratorische Gleitmittel (NM-SA) ausgewählt ist aus

(i) Polysiloxan

oder

(ii) sekundärem Fettsäureamid; und

(d) das Anti-Blockierungsmittel (AB) ein anorganisches Material ist.

**2.** Gegenstand nach Anspruch 1, wobei

(A)

(a) das Polyolefin (PO) ein Polyethylen (PE) und/oder ein Polypropylen (PP) ist;

und/oder

(b) das Metall (M) ausgewählt ist aus der Gruppe, bestehend aus Eisen, Eisen-Legierung, wie Stahl, Kupfer, Kupfer-Legierung, Aluminium und Aluminium-Legierung;

und/oder

(B)

(a) der Gegenstand zwischen dem Substrat (S) und der Polymer-Schicht (PL) eine Haft-Schicht (AL) umfasst;

und/oder

(b) die Polymer-Schicht (PL) die Oberflächen-Schicht des Gegenstands ist.

**3.** Gegenstand nach einem der vorangehenden Ansprüche, wobei Polyolefin (PO) ein Polyethylen (PE) ist mit

(a) einer Schmelze-Fließ-Rate $MFR_2$ (190°C), gemessen gemäß ISO 1133, von mindestens 2,5 g/10 min; und/oder
(b) einem Kalt-Härtungs-Faktor (SHF) von mindestens 2,0, gemessen bei einer Dehngeschwindigkeit von 3,0 $s^{-1}$ und einer Hencky-Dehnung von 2,5 (140°C);
und/oder
(c) einer verzweigten Struktur.

**4.** Gegenstand nach einem der vorangehenden Ansprüche 1 bis 3, wobei Polyolefin (PO) ein Polypropylen (PP) ist mit

(a) einer Schmelze-Fließ-Rate $MFR_2$ (230°C), gemessen gemäß ISO 1133, von mindestens 2,0 g/10 min; und/oder
(b) einem Kalt-Härtungs-Faktor (SHF) von mindestens 1,7, gemessen bei einer Dehngeschwindigkeit von 3,0 $s^{-1}$ und einer Hencky-Dehnung von 2,5 (180°C);
und/oder
(c) einer verzweigten Struktur.

**5.** Gegenstand nach einem der vorangehenden Ansprüche, wobei die Menge von

(a) dem nicht-migratorischen Gleitmittel (NM-SA) in der Zusammensetzung (Co) in dem Bereich von 0,05 bis 8,0 Gew.-%, basierend auf der Gesamt-Menge der Zusammensetzung (Co), ist; und/oder
(b) das nicht-migratorische Gleitmittel (NM-SA) ein Molekular-Gewicht von mindestens 400 g/Mol aufweist; und/oder
(c) das Anti-Blockierungsmittel (AB) in der Zusammensetzung (Co) in dem Bereich von 0,5 bis 10,0 Gew.-%, basierend auf der Gesamt-Menge der Zusammensetzung (Co), ist;

**6.** Gegenstand nach einem der vorangehenden Ansprüche, wobei das nicht-migratorische Gleitmittel (NM-SA) ist

(a) ein Polysiloxan,
(b) vorzugsweise ein Polysiloxan der Formel (III)

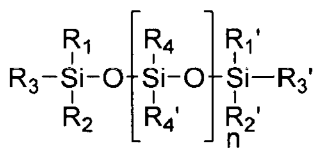

worin

$R_1$, $R_{1'}$, $R_2$, $R_{2'}$, $R_3$, $R_{3'}$, $R_4$ und $R_{4'}$ unabhängig voneinander Alkyl- oder Aryl-Reste, wie $-CH_3$, $-CH_2CH_3$, $C_3$-Alkyl, $C_4$-Alkyl, $C_5$-Alkyl oder Phenyl, darstellen, und
n eine positive ganze Zahl von 30 bis 500 ist,

(c) bevorzugter ein Polysiloxan der Formel (III)

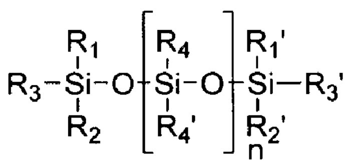

worin

$R_1$, $R_{1'}$, $R_2$, $R_{2'}$, $R_3$, $R_{3'}$, $R_4$ und $R_{4'}$ gleiche Alkyl-Reste, wie $-CH_3$, $-CH_2CH_3$, $C_3$-Alkyl, $C_4$-Alkyl, $C_5$-Alkyl, vorzugsweise $-CH_3$, darstellen und

n ein positive ganze Zahl von 30 bis 500, vorzugsweise von 90 bis 410, ist.

**7.** Gegenstand nach Anspruch 5, wobei das nicht-migratorische Gleitmittel (NM-SA) ein sekundäres Amid von Fettsäure ist, vorzugsweise das nicht-migratorische Gleitmittel (NM-SA), ist

(a) ein Fettsäureamid-Derivat der Formel (I)

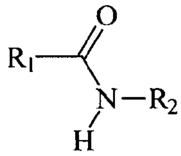

mit

$R_1$ ein $C_5$ bis $C_{25}$-Alkyl-Rest oder $C_5$ bis $C_{25}$-AlkenylRest ist,
$R_2$ ein lang-kettiger organischer Rest, der mindestens 6 Kohlenstoff-Atome enthält, ist oder vorzugsweise

(b) ein Fettsäureamid-Derivat der Formel (Ia)

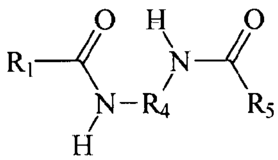

wobei

$R_1$ und $R_5$ unabhängig voneinander ein $C_5$ bis $C_{25}$-Alkyl-Rest sind,
$R_4$ ein $C_1$ bis $C_6$-Alkyl-Rest ist,

oder bevorzugter
(c) N,N'-Bisstearoylethylendiamid.

**8.** Gegenstand nach einem der vorangehenden Ansprüche, wobei die Polymer-Schicht (PL) eine Dicke in dem Bereich von 5 bis 1 000 μm aufweist.

**9.** Verfahren zum Extrusions-Beschichten eines Substrats durch Extrudieren einer Zusammensetzung (Co) in einem geschmolzenen Zustand durch eine Flach-Düse auf das Substrat (S) bei einer Temperatur von 220 bis 280°C, wodurch eine Polymer-Schicht (PL) auf dem Substrat (S) gebildet wird, wobei

(a) das Substrat (S) ein Metall (M) ist;
und
(b) die Zusammensetzung (Co) umfasst

(b1) Polyolefin (PO),
(b2) ein nicht-migratorisches Gleitmittel (NM-SA), und
(b3) ein Anti-Blockierungsmittel (AB);

(c) das nicht-migratorische Gleitmittel (NM-SA) ausgewählt ist aus

(iii) Polysiloxan
oder
(iv) sekundärem Fettsäureamid; und

(d) das Anti-Blockierungsmittel (AB) ein anorganisches Material ist,

wobei gegebenenfalls das beschichtete Substrat anschließend zu Dosen, wie Getränke-Dosen oder Weißblech-Dosen, geformt wird.

**10.** Verfahren nach Anspruch 9, wobei

(a) das Metall (M) ausgewählt ist aus der Gruppe, bestehend aus Eisen, Eisen-Legierung, wie Stahl, Kupfer, Kupfer-Legierung, Aluminium und AluminiumLegierung,
(b) das Polyolefin (PO) ein Polyethylen (PE) und/oder ein Polypropylen (PP) ist,
wobei vorzugsweise

(b1) das Polyolefin (PO) Polyethylen (PE) ist, mit

(b1-1) einer Schmelze-Fließ-Rate $MFR_2$ (190°C), gemessen gemäß ISO 1133, von mindestens 2,5 g/10 min, und/oder
(b1-2) einem Kalt-Härtungs-Faktor (SHF) von mindestens 2,0, gemessen bei einer Dehngeschwindigkeit von 3,0 $s^{-1}$ und einer Hencky-Dehnung von 2,5 (140°C),

oder
(b2) das Polyolefin (PO) ein Polypropylen (PP) ist, mit

(b2-1) einer Schmelze-Fließ-Rate $MFR_2$ (230°C), gemessen gemäß ISO 1133, von mindestens 2,0 g/10 min, und/oder
(b2-2) einem Kalt-Härtungs-Faktor (SHF) von mindestens 1,7, gemessen bei einer Dehngeschwindigkeit von 3,0 $s^{-1}$ und einer Hencky-Dehnung von 2,5 (180°C).

**11.** Verfahren nach Anspruch 9 oder 10, wobei

(a) die Menge von

(a1) dem nicht-migratorischen Gleitmittel (NM-SA) in der Zusammensetzung (Co) in dem Bereich von 0,05 bis 8,0 Gew.-%, basierend auf der Gesamt-Menge der Zusammensetzung (Co), ist, und/oder
(a2) das Anti-Blockierungsmittel (AB) in der Zusammensetzung (Co) in dem Bereich von 0,5 bis 10,0 Gew.-%, basierend auf der Gesamt-Menge der Zusammensetzung (Co), ist,

und/oder
(b) das nicht-migratorische Gleitmittel (NM-SA) ist

(b1) ein Fettsäureamid-Derivat

(b1.1) der Formel (I)

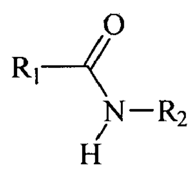

mit

$R_1$ ein $C_5$ bis $C_{25}$-Alkyl-Rest oder $C_5$ bis $C_{25}$-Alkenyl-Rest ist,
$R_2$ ein lang-kettiger organischer Rest, der mindestens 6 Kohlenstoff-Atome enthält, ist,

oder
(b1.2) vorzugsweise der Formel (Ia)

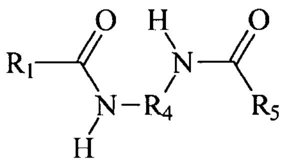

wobei

$R_1$ und $R_5$ unabhängig voneinander ein $C_5$ bis $C_{25}$-Alkyl-Rest sind,
$R_4$ ein $C_1$ bis $C_6$-Alkyl-Rest ist,

oder
(b1.3) bevorzugter N,N'-Bisstearoylethylendiamid ist,

oder
(b2) ein Polysiloxan

(b2.1) der Formel (III)

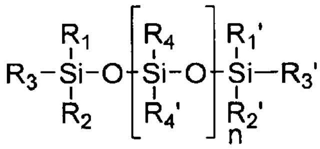

worin

$R_1$, $R_{1'}$, $R_2$, $R_{2'}$, $R_3$, $R_{3'}$, $R_4$ und $R_{4'}$ unabhängig voneinander Alkyl- oder Aryl-Reste, wie $-CH_3$, $-CH_2CH_3$, $C_3$-Alkyl, $C_4$-Alkyl, $C_5$-Alkyl oder Phenyl, sind und
n eine positive ganze Zahl von 30 bis 500 ist,

oder
(b2.2) vorzugsweise der Formel (III)

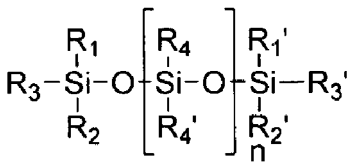

worin

$R_1$, $R_{1'}$, $R_2$, $R_{2'}$, $R_3$, $R_{3'}$, $R_4$ und $R_{4'}$ gleiche Alkyl-Reste, wie $-CH_3$, $-CH_2CH_3$, $C_3$-Alkyl, $C_4$-Alkyl, $C_5$-Alkyl, vorzugsweise $-CH_3$, sind und
n eine positive ganze Zahl von 30 bis 500, vorzugsweise von 90 bis 410, ist,

oder
(b2.3) bevorzugter Polydimethylsiloxan mit einem Molekular-Gewicht von mindestens 400 g/Mol sind.

**12.** Verwendung von einem nicht-migratorischen Gleitmittel (NM-SA) zusammen mit einem Anti-Blockierungsmittel (AB) in einer Polymer-Schicht (PL), die auf ein Substrat (S) Extrusions-beschichtet worden ist, das ein Metall (M) ist, zum Vermindern des Reibungskoeffizienten (COF) der Polymer-Schicht (PL), wobei der Reibungskoeffizient (COF) unter 0,5 ist,
wobei das nicht-migratorische Gleitmittel (NM-SA) ausgewählt ist aus

(a) Polysiloxan

oder
(b) sekundärem Fettsäureamid, und

wobei das Anti-Blockierungsmittel (AB) ein anorganisches Material ist.

**13.** Verwendung nach Anspruch 12, wobei das nicht-migratorische Gleitmittel (NM-SA) zusammen mit dem Anti-Blockierungsmittel (AB) die Anhaftungs-Leistung der Polymer-Schicht (PL) nicht beeinträchtigt, wobei die Anhaftungs-Leistung nach 31 Tagen der Herstellung der Polymer-Schicht (PL) mindestens 4 ist.

**14.** Verwendung einer Zusammensetzung (Co) zum Beschichten des Substrat (S), wodurch die Zusammensetzung eine Polymer-Schicht (PL) auf dem Substrat (S) bildet, wobei die Polymer-Schicht die Oberflächen-Schicht ist, wobei weiterhin

(a) das Substrat (S) ein Metall (M) ist;
und
(b) die Zusammensetzung (Co) umfasst

(b1) Polyolefin (PO),
(b2) ein nicht-migratorisches Gleitmittel (NM-SA) ausgewählt aus

(i) Polysiloxan
oder
(ii) sekundärem Fettsäureamid, und

(b3) wobei ein Anti-Blockierungsmittel (AB) ein anorganisches Material ist.

**15.** Verwendung nach Anspruch 14, wobei das Polyolefin (PO), das nicht-migratorische Gleitmittel (NM-SA) und/oder das Anti-Blockierungsmittel (AB) weiterhin wie in Anspruch 16 und/oder 17 definiert sind.

**16.** Verwendung nach Anspruch 14 oder 15, wobei die Polymer-Schicht (PL) zusätzlich zu dem Gleit-Mittel (SA) ein Polyolefin (PO) umfasst, wobei weiterhin

(a) das Polyolefin (PO) Polyethylen (PE) ist, mit

(a1) einer Schmelze-Fließ-Rate $MFR_2$ (190°C), gemessen gemäß ISO 1133, von mindestens 2,5 g/10 min,
und/oder
(a2) einem Kalt-Härtungs-Faktor (SHF) von mindestens 2,0, gemessen bei einer Dehngeschwindigkeit von 3,0 $s^{-1}$ und einer Hencky-Dehnung von 2,5 (140°C),

oder
(b) das Polyolefin (PO) ein Polypropylen (PP) ist, mit

(b2) einer Schmelze-Fließ-Rate $MFR_2$ (230°C), gemessen gemäß ISO 1133, von mindestens 5,0 g/10 min,
und/oder
(b2) einem Kalt-Härtungs-Faktor (SHF) von mindestens 1,7, gemessen bei einer Dehngeschwindigkeit von 3,0 $s^{-1}$ und einer Hencky-Dehnung von 2,5 (180°C).

**17.** Verwendung nach einem der vorstehenden Ansprüche 14 bis 16, wobei

(a) die Menge von

(a1) dem nicht-migratorischen Gleitmittel (NM-SA) in der Zusammensetzung (Co) und/oder Polymer-Schicht (PL) in dem Bereich von 0,05 bis 8,0 Gew.-%, basierend auf der Gesamt-Menge der Zusammensetzung (Co), ist,
und/oder
(a2) dem Anti-Blockierungsmittel (AB) in der Zusammensetzung (Co) und/oder in der Polymer-Schicht (PL) in dem Bereich von 0,5 bis 10,0 Gew.-%, basierend auf der Gesamt-Menge der Zusammensetzung (Co), ist,

und/oder
(b) das nicht-migratorische Gleitmittel (NM-SA) ist

(b1) ein Fettsäureamid-Derivat

(b1.1) der Formel (I)

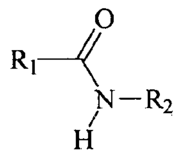

mit

$R_1$ ein $C_5$ bis $C_{25}$-Alkyl-Rest oder $C_5$ bis $C_{25}$-Alkenyl-Rest ist,
$R_2$ ein lang-kettiger organischer Rest, der mindestens 6 Kohlenstoff-Atome enthält, ist,
oder

(b1.2) vorzugsweise der Formel (Ia)

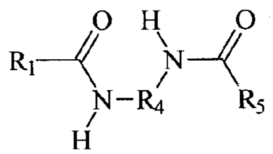

wobei

$R_1$ und $R_5$ unabhängig voneinander ein $C_5$ bis $C_{25}$-Alkyl-Rest sind,
$R_4$ ein $C_1$ bis $C_6$-Alkyl-Rest ist,

oder
(b1.3) bevorzugter N,N'-Bisstearoylethylendiamid ist,

oder
(b2) ein Polysiloxan

(b2.1) der Formel (III)

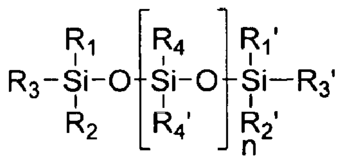

worin

$R_1$, $R_{1'}$, $R_2$, $R_{2'}$, $R_3$, $R_{3'}$, $R_4$ und $R_{4'}$ unabhängig voneinander Alkyl- oder Aryl-Reste, wie $-CH_3$, $-CH_2CH_3$, $C_3$-Alkyl, $C_4$-Alkyl, $C_5$-Alkyl oder Phenyl sind, und
n eine positive ganze Zahl von 30 bis 500 ist,

oder
(b2.2) vorzugsweise der Formel (III)

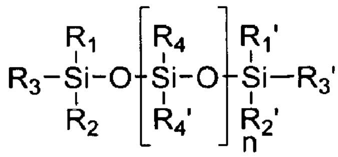

worin

$R_1$, $R_{1'}$, $R_2$, $R_{2'}$, $R_3$, $R_{3'}$, $R_4$ und $R_{4'}$ gleiche Alkyl-Reste, wie $-CH_3$, $-CH_2CH_3$, $C_3$-Alkyl, $C_4$-Alkyl, $C_5$-Alkyl, vorzugsweise $-CH_3$, sind und
n eine positive ganze Zahl von 30 bis 500, vorzugsweise von 90 bis 410, ist,

oder
(b2.3) bevorzugter Polydimethylsiloxan mit einem Molekular-Gewicht von mindestens 400 g/Mol ist.

## Revendications

**1.** Article comprenant un substrat (S) et une couche de polymère (PL), ladite couche de polymère (PL) étant déposée sous forme de revêtement par extrusion sur le substrat (S), dans lequel

(a) ledit substrat (S) est un métal (M) ;
(b) la couche de polymère (PL) comprend une composition (Co) comprenant

(b1) une polyoléfine (PO),
(b2) un agent de glissement non migratoire (NM-SA), et
(b3) un agent antiblocage (AB) ;

(c) l'agent de glissement non migratoire (NM-SA) est choisi parmi

(i) un polysiloxane
et
(ii) un amide secondaire d'acide gras ; et

(d) l'agent antiblocage (AB) est un matériau inorganique.

**2.** Article selon la revendication 1, dans lequel

(A)

(a) la polyoléfine (PO) est un polyéthylène (PE) et/ou un polypropylène (PP) ;
et/ou
(b) le métal (M) est choisi dans l'ensemble constitué par le fer, un alliage de fer tel qu'un acier, le cuivre, un alliage de cuivre, l'aluminium, et un alliage d'aluminium ;

et/ou
(B)

(a) l'article comprend une couche d'adhérence (AL) entre le substrat (S) et la couche de polymère (PL) ;
et/ou
(b) la couche de polymère (PL) est la couche de surface de l'article.

**3.** Article selon l'une des revendications précédentes, dans lequel la polyoléfine (PO) est un polyéthylène (PE) présentant

(a) un indice de fluage $MFR_2$ (190°C), mesuré conformément à la norme ISO 1133, d'au moins 2,5 g/10 min ;
et/ou
(b) un facteur d'écrouissage (SHF) d'au moins 2,0, mesuré à une vitesse de déformation de 3,0 $s^{-1}$ et une

déformation Hencky de 2,5 (140°C) ;
et/ou
(c) une structure ramifiée.

**4.** Article selon l'une des revendications 1 à 3, dans lequel la polyoléfine (PO) est un polypropylène (PP) présentant

(a) un indice de fluage $MFR_2$ (230°C), mesuré conformément à la norme ISO 1133, d'au moins 2,0 g/10 min ;
et/ou
(b) un facteur d'écrouissage (SHF), d'au moins 1,7, mesuré à une vitesse de déformation de 3,0 $s^{-1}$ et une déformation Hencky de 2,5 (180°C);
et/ou
(c) une structure ramifiée.

**5.** Article selon l'une des revendications précédentes, dans lequel

(a) la quantité de l'agent de glissement non migratoire (NM-SA) dans la composition (Co) est située dans la plage allant de 0,05 à 8,0 % en poids par rapport à la quantité totale de la composition (Co) ;
et/ou
(b) l'agent de glissement non migratoire (NM-SA) présente une masse moléculaire d'au moins 400 g/mol ;
et/ou
(c) la quantité de l'agent antiblocage (AB) dans la composition (Co) est située dans la plage allant de 0,5 à 10,0 % en poids par rapport à la quantité totale de la composition (Co).

**6.** Article selon l'une des revendications précédentes, dans lequel l'agent de glissement non migratoire (NM-SA) est

(a) un polysiloxane,
(b) de préférence un polysiloxane de formule (III)

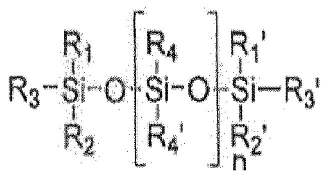

dans laquelle

$R_1$, $R_1$', $R_2$, $R_2$', $R_3$, $R_3$', $R_4$ et $R_4$' sont, indépendamment les uns des autres, des résidus alkyle ou aryle, tels que $-CH_3$, $-CH_2CH_3$, alkyle en $C_3$, alkyle en $C_4$, alkyle en $C_5$ ou phényle, et
n est un entier positif de 30 à 500,

(c) plus préférablement un polysiloxane de formule (III)

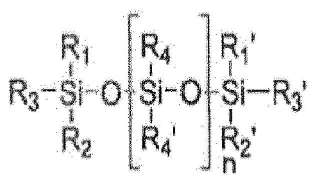

dans laquelle

$R_1$, $R_1$', $R_2$, $R_2$', $R_3$, $R_3$', $R_4$ et $R_4$' sont des résidus alkyle identiques, tels que $-CH_3$, $-CH_2CH_3$, alkyle en $C_3$, alkyle en $C_4$, alkyle en $C_5$, de préférence $-CH_3$, et
n est un entier positif de 30 à 500, de préférence de 90 à 410.

**7.** Article selon la revendication 5, dans lequel l'agent de glissement non migratoire (NM-SA) est un amide secondaire d'acide gras, de préférence l'agent de glissement non migratoire (NM-SA) est

(a) un dérivé d'amide d'acide gras de formule (I)

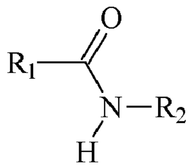

dans laquelle

$R_1$ est un résidu alkyle en $C_5$ à $C_{25}$ ou un résidu alcényle en $C_5$ à $C_{25}$,
$R_2$ est un résidu organique à longue chaîne contenant au moins 6 atomes de carbone,

ou de préférence
(b) un dérivé d'amide d'acide gras de formule (Ia)

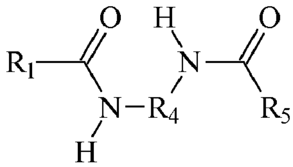

dans laquelle

$R_1$ et $R_5$ sont indépendamment un résidu alkyle en $C_5$ à $C_{25}$,
$R_4$ est un résidu alkyle en $C_1$ à $C_6$,

ou plus préférablement
(c) le N,N'-bis-stéaroyléthylènediamide.

**8.** Article selon l'une des revendications précédentes, dans lequel la couche de polymère (PL) présente une épaisseur située dans la plage allant de 5 à 1000 $\mu$m.

**9.** Procédé de revêtement par extrusion d'un substrat par extrusion d'une composition (Co) à l'état fondu à travers une filière plate sur ledit substrat (S) à une température de 220°C à 280°C, ce qui forme ainsi une couche de polymère (PL) sur ledit substrat (S), dans lequel

(a) ledit substrat (S) est un métal (M) ;
et
(b) la composition (Co) comprend

(b1) une polyoléfine (PO),
(b2) un agent de glissement non migratoire (NM-SA), et
(b3) un agent antiblocage (AB) ;

(c) l'agent de glissement non migratoire (NM-SA) est choisi parmi

(iii)un polysiloxane
et
(iv) un amide secondaire d'acide gras ; et

(d) l'agent antiblocage (AB) est un matériau inorganique, dans lequel, éventuellement, le substrat revêtu est ensuite mis sous la forme de bidons, tels que des canettes pour boissons ou des boîtes de conserve.

**10.** Procédé selon la revendication 9, dans lequel

(a) le métal (M) est choisi dans l'ensemble constitué par le fer, un alliage de fer tel qu'un acier, le cuivre, un alliage de cuivre, l'aluminium, et un alliage d'aluminium,
(b) la polyoléfine (PO) est un polyéthylène (PE) et/ou un polypropylène (PP), où de préférence

(b1) la polyoléfine (PO) est un polyéthylène (PE) présentant

(b1-1) un indice de fluage $MFR_2$ (190°C), mesuré conformément à la norme ISO 1133, d'au moins 2,5 g/10 min,
et/ou
(b1-2) un facteur d'écrouissage (SHF), d'au moins 2,0, mesuré à une vitesse de déformation de 3,0 $s^{-1}$ sous une déformation Hencky de 2,5 (140°C),

ou
(b2) la polyoléfine (PO) est un polypropylène (PP) présentant

(b2-1) un indice de fluage $MFR_2$ (230°C), mesuré conformément à la norme ISO 1133, d'au moins 2,0 g/10 min,
et/ou
(b2-2) un facteur d'écrouissage (SHF), d'au moins 1,7, mesuré à une vitesse de déformation de 3,0 $s^{-1}$ et une déformation Hencky de 2,5 (180°C).

**11.** Procédé selon la revendication 9 ou 10, dans lequel

(a) la quantité

(a1) de l'agent de glissement non migratoire (NM-SA) dans la composition (Co) est située dans la plage allant de 0,05 à 8,0 % en poids par rapport à la quantité totale de la composition (Co) ;
et/ou
(a2) de l'agent antiblocage (AB) dans la composition (Co) est située dans la plage allant de 0,5 à 10,0 % en poids par rapport à la quantité totale de la composition (Co),

et/ou
(b) l'agent de glissement non migratoire (NM-SA) est

(b1) un dérivé d'amide d'acide gras

(b1.1) de formule (I)

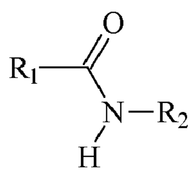

dans laquelle

$R_1$ est un résidu alkyle en $C_5$ à $C_{25}$ ou un résidu alcényle en $C_5$ à $C_{25}$,
$R_2$ est un résidu organique à longue chaîne contenant au moins 6 atomes de carbone,

ou
(b1.2) de préférence de formule (Ia)

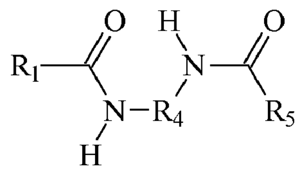

dans laquelle

$R_1$ et $R_5$ sont indépendamment un résidu alkyle en $C_5$ à $C_{25}$,
$R_4$ est un résidu alkyle en $C_1$ à $C_6$,

ou
(b1.3) plus préférablement le N,N'-bis-stéaroyléthylènediamide,

ou
(b2) un polysiloxane

(b2.1) de formule (III)

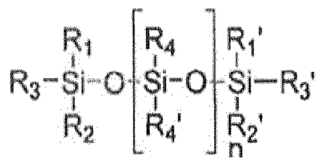

dans laquelle

$R_1$, $R_1$', $R_2$, $R_2$', $R_3$, $R_3$', $R_4$ et $R_4$' sont, indépendamment les uns des autres, des résidus alkyle ou aryle, tels que $-CH_3$, $-CH_2CH_3$, alkyle en $C_3$, alkyle en $C_4$, alkyle en $C_5$ ou phényle, et
n est un entier positif de 30 à 500,

ou
(b2.2) de préférence de formule (III)

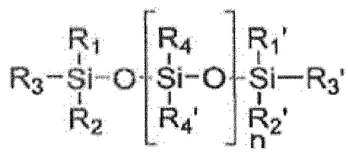

dans laquelle

$R_1$, $R_1$', $R_2$, $R_2$', $R_3$, $R_3$', $R_4$ et $R_4$' sont des résidus alkyle identiques, tels que $-CH_3$, $-CH_2CH_3$, alkyle en $C_3$, alkyle en $C_4$, alkyle en $C_5$, de préférence $-CH_3$, et
n est un entier positif de 30 à 500, de préférence de 90 à 410,

ou
(b2.3) plus préférablement un polydiméthyl-siloxane présentant une masse moléculaire d'au moins 400 g/mol.

**12.** Utilisation d'un agent de glissement non migratoire (NM-SA) conjointement avec un agent antiblocage (AB) dans une couche de polymère (PL) qui est déposé sous forme de revêtement par extrusion sur un substrat (S) qui est un métal (M) pour que soit réduit le coefficient de frottement (COF) de ladite couche de polymère (PL), dans laquelle le coefficient de frottement (COF) est inférieur à 0,5,
dans laquelle l'agent de glissement non migratoire (NM-SA) est choisi parmi

(a) un polysiloxane,
et
(b) un amide secondaire d'acide gras, et

dans laquelle l'agent antiblocage (AB) est un matériau inorganique.

**13.** Utilisation selon la revendication 12, dans laquelle l'agent de glissement non migratoire (NM-SA), conjointement avec l'agent antiblocage (AB), ne compromettent pas la performance d'adhérence de ladite couche de polymère (PL), la performance d'adhérence étant d'au moins 4 après 31 jours de préparation de la couche de polymère (PL).

**14.** Utilisation d'une composition (Co) pour revêtir un substrat (S), la composition formant une couche de polymère (PL) sur ledit substrat (S), dans laquelle la couche de polymère est la couche de surface, dans laquelle en outre

(a) ledit substrat (S) est un métal (M) ;
et
(b) la composition (Co) comprend

(b1) une polyoléfine (PO),
(b2) un agent de glissement non migratoire (NM-SA) choisi parmi

(i) un polysiloxane
ou
(ii) un amide secondaire d'acide gras ; et

(b3) un agent antiblocage (AB) qui est un matériau inorganique.

**15.** Utilisation selon la revendication 14, dans laquelle la polyoléfine (PO), l'agent de glissement non migratoire (NM-SA) et/ou l'agent antiblocage (AB) est/sont en outre défini(s) comme dans les revendication(s) 16 et/ou 17.

**16.** Utilisation selon la revendication 14 ou 15, dans laquelle la couche de polymère (PL) comprend, en plus de l'agent de glissement (SA), une polyoléfine (PO), et dans laquelle en outre

(a) la polyoléfine (PO) est un polyéthylène (PE) présentant

(a1) un indice de fluage $MFR_2$ (190°C), mesuré conformément à la norme ISO 1133, d'au moins 2,5 g/10 min,
et/ou
(a2) un facteur d'écrouissage (SHF) d'au moins 2,0, mesuré à une vitesse de déformation de 3,0 $s^{-1}$ et une déformation Hencky de 2,5 (140°C),

ou
(b) la polyoléfine (PO) est un polypropylène (PP) présentant

(b1) un indice de fluage $MFR_2$ (230°C), mesuré conformément à la norme ISO 1133, d'au moins 5,0 g/10 min,
et/ou
(b2) un facteur d'écrouissage (SHF), d'au moins 1,7, mesuré à une vitesse de déformation de 3,0 $s^{-1}$ et une déformation Hencky de 2,5 (180°C).

**17.** Utilisation selon l'une des revendications 14 à 16, dans laquelle

(a) la quantité

(a1) de l'agent de glissement non migratoire (NM-SA) dans la composition (Co) et/ou la couche de polymère (PL) est située dans la plage allant de 0,05 à 8,0 % en poids par rapport à la quantité totale de la composition (Co) ;
et/ou
(a2) de l'agent antiblocage (AB) dans la composition (Co) et/ou dans la couche de polymère (PL) est située dans la plage allant de 0,5 à 10,0 % en poids par rapport à la quantité totale de la composition (Co),

et/ou
(b) l'agent de glissement non migratoire (NM-SA) est

(b1) un dérivé d'amide d'acide gras

(b1.1) de formule (I)

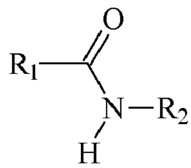

dans laquelle

$R_1$ est un résidu alkyle en $C_5$ à $C_{25}$ ou un résidu alcényle en $C_5$ à $C_{25}$,
$R_2$ est un résidu organique à longue chaîne contenant au moins 6 atomes de carbone,

ou
(b1.2) de préférence de formule (Ia)

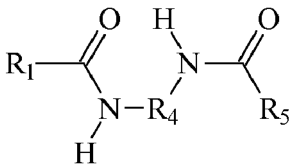

dans laquelle

$R_1$ et $R_5$ sont indépendamment un résidu alkyle en $C_5$ à $C_{25}$,
$R_4$ est un résidu alkyle en $C_1$ à $C_6$,

ou
(b1.3) plus préférablement le N,N'-bis-stéaroyléthylènediamide,

ou
(b2) un polysiloxane

(b2.1) de formule (III)

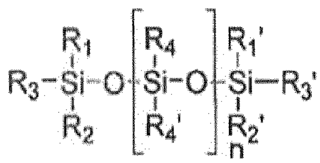

dans laquelle

$R_1$, $R_1$', $R_2$, $R_2$', $R_3$, $R_3$', $R_4$ et $R_{4'}$ sont, indépendamment les uns des autres, des résidus alkyle ou aryle, tels que $-CH_3$, $-CH_2CH_3$, alkyle en $C_3$, alkyle en $C_4$, alkyle en $C_5$ ou phényle, et
n est un entier positif de 30 à 500,

ou
(b2.2) de préférence de formule (III)

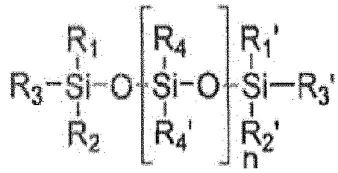

dans laquelle

$R_1$, $R_1$', $R_2$, $R_2$', $R_3$, $R_3$', $R_4$ et $R_4$' sont des résidus alkyle identiques, tels que $-CH_3$, $-CH_2CH_3$, alkyle en $C_3$, alkyle en $C_4$, alkyle en $C_5$, de préférence $-CH_3$, et
n est un entier positif de 30 à 500, de préférence de 90 à 410,

ou
(b2.3) plus préférablement un polydiméthyl-siloxane présentant une masse moléculaire d'au moins 400 g/mol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0572028 A
- WO 96016119 A
- EP 1777238 A
- EP 1167396 A
- DE 10351262 A
- WO 2007134671 A
- EP 2123707 A
- EP 1892264 A
- EP 0787750 A
- EP 0879830 A1
- EP 0890612 A2


### Non-patent literature cited in the description


- **R.A.V. RAFF ; K.W. DOAK.** Crystalline Olefin Polymers. Interscience Publishers, 1964, 478-484
- **DOMINICK V. ROSATO.** Plastics Processing Data Handbook. Chapman & Hall, 1997, 273-277
- **VIEWEG, SCLEY ; SCHWARTZ, KUNSTSTOFF HANDBUCH.** Polyolefine. Carl Hanser Verlag, 1969, vol. IV, 39-51
- *Encyclopedia of Polymer Science and Engineering,* 1986, vol. 6, 383-410
- Polyethylene: High-pressure. Encyclopedia of Materials: Science and Technology. Elsevier Science Ltd, 2001, 7181-7184
- **G. SAUNDERS ; P. A. G: CORMACK ; S. GRAHAM ; D. C. SHERRINGTON.** *Macromolecules,* 2005, vol. 38, 6418-6422
- Molecular Weight Sensitive Detectors. **C. JACKSON ; H. G. BARTH.** Handbook of Size Exclusion Chromatography and related techniques. Marcel Dekker, 2004, 103
- **BAUMGÄRTEL M ; WINTER HH.** Determination of the discrete relaxation and retardation time spectra from dynamic mechanical data. *Rheol.Acta,* 1989, vol. 28, 511519